# EUROPÄISCHE PATENTSCHRIFT

(11) **EP 4 473 818 B1**
(45) Veröffentlichungstag und Bekanntmachung des Hinweises auf die Patenterteilung: **18.11.2026**
(21) Anmeldenummer: 24207752.7
(22) Anmeldetag: 14.04.2020
(51) Int. Cl.: A01B 63/114, A01B 63/111, A01C 7/20, A01C 7/08, A01B 63/00

(54) **LANDWIRTSCHAFTLICHE MASCHINE, VORZUGSWEISE ZUR BODENBEARBEITUNG UND/ODER AUSSAAT UND VERFAHREN ZUM REGELN DER ARBEITSTIEFE EINER WERKZEUGEINHEIT**
AGRICULTURAL MACHINE, PREFERABLY FOR SOIL CULTIVATION AND/OR SOWING, AND METHOD FOR CONTROLLING AND/OR REGULATING THE WORKING DEPTH OF A TOOL UNIT
MACHINE AGRICOLE, DE PRÉFÉRENCE POUR LE TRAVAIL DU SOL ET/OU LE SEMIS, ET PROCÉDÉ DE COMMANDE ET/OU DE RÉGLAGE DE LA PROFONDEUR DE TRAVAIL D'UNE UNITÉ OUTIL

(30) Priorität: 08.11.2019 DE 102019217332; 12.12.2019 DE 102019134184
(43) Veröffentlichungstag der Anmeldung: 11.12.2024
(62) Dokumentnummer(n) der früheren Anmeldung(en) nach Art. 76 EPÜ: 20721093.1 / 4 054 305
(73) Patentinhaber: Horsch Maschinen SE & Co. KG, 92421 Schwandorf (DE)
(72) Erfinder: PRÜLL, Thomas, 92421 Schwandorf (DE); HORSCH, Philipp, 92421 Schwandorf (DE)
(74) Vertreter: Benninger, Johannes

(56) Entgegenhaltungen:
- EP-A1- 3 165 063
- EP-A1- 3 403 479
- EP-A1- 3 501 248
- CN-A- 109 892 067
- JP-B2- 3 797 902
- US-A1- 2019 254 223

## Beschreibung

Die Erfindung betrifft eine landwirtschaftliche Maschine, vorzugsweise zur Bodenbearbeitung und/oder Aussaat mit den Merkmalen des unabhängigen Anspruchs 1 sowie ein Verfahren zum Steuern und/oder Regeln der Arbeitstiefe einer Werkzeugeinheit mit den Merkmalen des Verfahrensanspruchs 16.

Es hat sich beim landwirtschaftlichen Anbau von Nutzpflanzen vielfach erwiesen, dass durch eine möglichst exakt eingehaltene und über den Bestand gleichmäßige Ablagetiefe des Saatguts ein wesentlich verbesserter Feldaufgang sowie ein gleichmäßigerer Bestand erreicht werden kann. Mit diesen positiven Effekten ist gleichzeitig ein höherer Ertrag verbunden. Außerdem können mit der Aussaat verbundene Düngemaßnahmen und den aufwachsenden Bestand pflegende und schützende Pflanzenschutzmaßnahmen deutlich gezielter geplant und umgesetzt werden.

Da die permanente Aufrechterhaltung einer vorgegebenen konstanten Ablagetiefe bei der Aussaat jedoch in der Praxis nicht immer zu gewährleisten ist, was unter anderem mit den unterschiedlichen Bodenbedingungen von zu bearbeitenden landwirtschaftlichen Flächen und insbesondere mit den von den jeweiligen Bodeneigenschaften abhängenden Widerständen zusammenhängen kann, wurden bereits sog. "AutoForce"-Systeme entwickelt und eingesetzt. Diese Systeme sollen im Wesentlichen für eine gleichbleibende Ablagetiefe durch bedarfsgerechte Variation eines Schardrucks bei der Aussaat sorgen. Derartige sog. "AutoForce"-Systeme wurden insbesondere im Bereich der Einzelkornsaat bekannt und werden im Zusammenhang mit der dabei verwendeten Maschinentechnik bereits von verschiedenen Herstellern bereits seit einigen Jahren in der Praxis eingesetzt.

Die EP 3 501 248 A1 beschreibt ein Regelungssystem für Arbeitswerkzeuge landwirtschaftlicher Maschinen, die u.a. zur Drillsaat eingesetzt werden sollen. Zwei oder mehr Arbeitswerkzeuge sind mittels elastischer Lagerelemente schwenkbar an einem Träger gelagert. Der Träger selbst ist an einem Lagerflansch oder einem Rahmenelement einer landwirtschaftlichen Maschine angebaut und kann mittels eines Aktors für eine Variation einer Winkelposition des Trägers in Bezug auf eine zu bearbeitende Ackerfläche verschwenkt werden. Auf diese Weise kann der Auflagedruck der Arbeitswerkzeuge und/oder ihre Arbeitstiefe im Boden verändert werden.

Eine landwirtschaftliche Maschine für die Bodenbearbeitung und/oder zur Aussaat ist aus der EP 2 335 465 A1 bekannt. Diese Maschine umfasst einen Rahmen mit mindestens zwei Querreihen, wobei dieser Rahmen mit den Querreihen mittels einer motorischen Stelleinrichtung schwenkbar an einem Maschinenrahmen gelagert ist. An den Querreihen sind jeweils Bodenbearbeitungselemente angebracht, wobei zumindest einem Bodenbearbeitungselement jeder Querreihe ein Sensorelement zur Erfassung der Auslenkung dieses gegenüber dem Maschinenrahmen zugeordnet ist. In Abhängigkeit von der erfassten Auslenkung werden auf Basis eines in einem Bordcomputer hinterlegten Auswerteprogramms die motorischen Stelleinrichtungen der Querreihen derartig angesteuert, dass die Auslenkungen der Bodenbearbeitungselemente der zwei Querreihen zumindest weitgehend gleich sind.

Die EP 3 165 063 A1 offenbart eine Einzelkornsämaschine mit einer Säeinheit, die ein Säschar und ein Rad oder eine Tragrolle umfasst, wobei sich die Säeinheit über das Rad oder über die Tragrolle auf dem Boden abstützt. Ein Sensor erfasst eine Relativbewegung der Säeinheit oder eines Elements der Säeinheit senkrecht zum Boden und liefert diese Daten an eine Steuereinheit. Die Relativbewegungen können bspw. mittels Drucksensoren, Winkelsensoren, Beschleunigungssensoren o. dgl. erfasst werden.

Aus der EP 3 403 479 A1 geht ein vollautomatischer Zinkenstriegel hervor. Der Zinkenstriegel weist einen Tragrahmen, mehrere an dem Tragrahmen schwenkbar angeordnete Arbeits-Striegelzinken sowie eine Zinkendruckverstelleinheit zur Veränderung der Vorspannung der Arbeits-Striegelzinken auf. An dem Tragrahmen ist zudem eine Messvorrichtung ausgebildet, welche eine Zinkenstriegel-Eindringtiefenmessvorrichtung umfasst. Die Zinkenstriegel-Eindringtiefenmessvorrichtung weist einen Träger, einen an dem Träger schwenkbar montierten Referenz-Striegelzinken und eine Abstandsmessvorrichtung benachbart dem Referenz-Striegelzinken zur Messung des Abstands zur Oberfläche eines zu bearbeitenden Bodens auf.

Durch die US 2019/254223 A1 ist eine Vorrichtung, ein System und zugehörige Verfahren zur Überwachung und Steuerung des Anpressdrucks und des Abhebeeffekts von landwirtschaftlichen Anbaugeräten bekannt. Für die Echtzeitüberwachung der Furchentiefe durch unterschiedliche Verfahren können diese mit einer Messwert-Rückmeldung von als Referenz vorgesehenen Rädern kombiniert werden, um die Zuführung eines zusätzlichen Anpressdrucks auf die Reiheneinheit zu kalibrieren und anderweitig zu steuern. Zur Erfassung der Furchentiefe wird eine Kombination von Sensortypen verwendet, die zur Anpassung des zusätzlichen Anpressdrucks über ein Steuermodul genutzt werden kann.

Im praktischen Einsatz solcher Systeme hat sich jedoch erwiesen, dass die Regelung der Sätiefe nicht mit der gewünschten Exaktheit zu realisieren ist, insbesondere bei wechselnden Bodenbedingungen und nicht konstanten Bodenwiderständen. Eine wichtige Rolle spielt hierbei der Einsatz von Packerwalzen, mit denen solche Maschinen in aller Regel ausgestattet sind. Die nachlaufenden Packerwalzen sinken je nach den vorliegenden Bodenverhältnissen mehr oder weniger stark in die Ackerfläche ein, was zur Verfälschung der Messwerte führt, auf welche die Saattiefenregelung zugreift.

Verstärkt wird dieser nachteilige Effekt durch eine häufig eingesetzte elastische Lagerung der Säschare, da aufgrund der elastischen Lagerelemente eine Auslenkung der Säschare gegenüber einer Bodenfläche oder Ackerfläche nicht konstant ist, insbesondere aufgrund des Einflusses der auf die Säschare wirkenden Vorspannkräfte. Eine Kombination von aus dem Bereich der Einzelkornsätechnik bekannten AutoForce-Systemen mit elatischen Lagerelementen für Säschare ist aus diesem Grund bisher nicht praktikabel.

Zwar kann mit der somit aus dem Stand der Technik bekannten landwirtschaftlichen Maschine die Einhaltung einer geforderten Arbeitstiefe verbessert werden, jedoch ist hierfür eine Mehrzahl von Sensorelementen und motorischen Stellelementen erforderlich sowie darüber hinaus ein entsprechendes Auswerteprogramm, wodurch diese Maschine sehr teuer, sehr wartungsintensiv und zudem aufwendig ist. Insbesondere erfolgt bei der aus dem Stand der Technik bekannten Maschine eine permanente Steuerung und/oder Regelung der motorischen Stelleinrichtungen, selbst bei geringen Unterschieden der Bodenbedingungen und der dadurch hervorgerufenen Veränderung der Auslenkung. Aufgrund der Vielzahl an motorischen Stelleinrichtungen und deren Trägheit ist jedoch eine schnelle Veränderung der Auslenkungen der Bodenbearbeitungselemente oftmals nicht zu erreichen, was zur Folge hat, dass eine auf Basis von Bodenbedingungen erforderliche Einstellung der Auslenkung erst verspätet erreicht wird und insbesondere erst dann erreicht wird, wenn bereits wieder andere Bodenbedingungen vorherrschen, was besonders ungünstige Effekte zeigen kann. Insbesondere wird mit der aus dem Stand der Technik bekannten landwirtschaftlichen Maschine eine dauerhafte Ansteuerung der motorischen Stelleinrichtungen durchgeführt, selbst bei nur geringen Unterschieden der Bodenbedingungen, wodurch jedoch entsprechend große Anforderungen an die Stelleinrichtung und den Bordcomputer gestellt werden.

Aufgabe der Erfindung ist es, eine landwirtschaftliche Maschine zur Verfügung zu stellen, mit der mit einfachen Mitteln auch bei wechselnden Bodenbedingungen eine gleichbleibende Arbeitstiefe erreicht werden kann. Insbesondere ist es eine Aufgabe der Erfindung, eine verbesserte Werkzeugtiefeneinstellung oder Sätiefentregelung oder Schardruckregelung zur Verfügung zu stellen, welche weitgehend unabhängig von jeweils herrschenden Bodenbedingungen und dem Aufbau der jeweils eingesetzten Maschine in der Lage ist, eine gewünschte Werkzeug- oder Sätiefe mit einer vorgegebenen Konstanz einzuhalten.

Diese Aufgaben werden gelöst durch eine landwirtschaftliche Maschine mit den Merkmalen des unabhängigen Anspruchs 1 sowie durch ein Verfahren zum Steuern und/oder Regeln der Arbeitstiefe einer Werkzeugeinheit mit den Merkmalen des unabhängigen Verfahrensanspruchs. Vorteilhafte Weiterbildungen der Erfindung sind in den jeweiligen abhängigen Ansprüchen und der Beschreibung angegeben.

Die Erfindung betrifft eine landwirtschaftliche Maschine, vorzugsweise zur Bodenbearbeitung und/oder zur Aussaat. Die Maschine umfasst zumindest einen Maschinenrahmen mit mindestens einem daran mittels eines Verstellmechanismus höhen- und/oder winkelverstellbar gelagerten Träger, wobei an diesem Träger wenigstens eine Werkzeugeinheit angebracht ist, deren Auflagedruck auf den zu bearbeitenden Boden und/oder deren Arbeitstiefe in Abhängigkeit von einer mittels des Verstellmechanismus einstellbaren Lage des Trägers gegenüber dem Maschinenrahmen veränderbar ist. Von der mittels des Verstellmechanismus einstellbaren, d.h. bedarfsweise in der Höhe und/oder im Winkel variierbaren Lage des Trägers gegenüber dem Maschinenrahmen hängt naturgemäß auch die Auslenkung und/oder Winkellage und/oder Höhenveränderung der Werkzeugeinheit gegenüber dem Maschinenrahmen ab.

D.h. die relativen Winkel und/oder relativen Höhenniveaus des Trägers und des Maschinenrahmens zueinander können mittels des Verstellmechanismus verändert und an jeweils benötigte Bedürfnisse angepasst werden. Die relative Verstellung des Trägers führt naturgemäß zur Veränderung und/oder zur Anpassung des relativen Winkels und/oder des relativen Höhenniveaus der wenigstens einen am Träger angebrachten Werkzeugeinheit, die den Boden im Sinne des vorgesehenen Einsatzzwecks der erfindungsgemäßen landwirtschaftlichen Maschine bearbeitet und/oder mit dem Boden oder Ackerboden in Eingriff ist oder in Eingriff gebracht werden kann.

Der Maschinenrahmen kann somit auch als Referenzbauteil oder als Bezugsbauteil zur Gewinnung von relativen Abständen, Winkeln oder sonstigen geometrischen Messgrößen zu daran aufgehängten oder gelenkig gelagerten Maschinenteilen oder Werkzeugeinheiten dienen. Ebenso kann der Maschinenrahmen auch als Referenz- oder Bezugsbauteil zur Gewinnung von Raumkoordinaten oder von Abständen oder anderen geometrischen Messgrößen in Bezug auf eine Umgebung, bspw. in Bezug auf eine Acker- oder Bodenfläche, dienen.

Wenn hier, d.h. an dieser Stelle sowie im Zusammenhang mit der vorliegenden Beschreibung, von Raumkoordinaten gesprochen wird, so können dies bspw. Abstände zur Acker- oder Bodenfläche sein. Ebenso können die Raumkoordinaten einen Bezug zu einer räumlichen Umgebung herstellen, bspw. durch Abstände, Höhendaten und/oder Winkel zu gegebenen Fixpunkten. Darüber hinaus kann der hier verwendete Begriff der Raumkoordinaten auch quasiabsolute Koordinaten angeben, die bspw. Beziehungen zu satellitengestützten Ortungssystemen herstellen und/oder mit Hilfe solcher satellitengestützter Ortungssysteme gewonnen werden. Die solchermaßen bestimmten Koordinaten können nahezu jeden beliebigen Ort auf der Erde durch normierte Koordinateninformationen bestimmen, d.h. bspw. seine Position als Angabe bekannter Längengrad- und Breitengradinformationen sowie einer zugehörigen Höheninformation, oder auch als andersartig codierte Lage- oder Koordinateninformation.

Die hier so bezeichnete mindestens eine Werkzeugeinheit kann bei einer Maschine zur Aussaat insbesondere eine Säeinheit oder ein Säaggregat mit Säschar und dazugehörigen Komponenten sein. Je nach Maschinenzweck kann die Werkzeugeinheit auch ein Bodenbearbeitungswerkzeug sein, dessen Arbeitstiefe auf die nachfolgend beschriebene und erfindungsgemäße Weise eingestellt und insbesondere konstant gehalten werden soll. Wenn hier sowie in der nachfolgenden Beschreibung aus sprachlichen Gründen auch oftmals von einer Werkzeugeinheit, von einer Säeinheit, von einem Säaggregat, einer Säschar oder einem sonstigen Bodenbearbeitungswerkzeug die Rede ist, so ist dies in zahlenmäßiger Hinsicht keinesfalls einschränkend zu verstehen, sondern kann grundsätzlich immer auch als Synonym für eine Mehrzahl oder Vielzahl von insbesondere gleichartigen oder weitgehend identischen Werkzeugeinheiten, Säeinheiten, Säaggregaten, Säschare oder sonstigen Bodenbearbeitungswerkzeugen gelesen und verstanden werden.

So kann es sich bei den in ihrer Tiefe regelbaren Bodenbearbeitungswerkzeugen, welche die hier so bezeichnete Werkzeugeinheit bilden, bspw. auch um Scheibenwerkzeuge oder Zinkenschare handeln, die in erster Linie der Vorbereitung des Erdreichs für eine weitere Behandlung wie insbesondere eine Aussaat dienen können.

Weiterhin umfasst die landwirtschaftliche Maschine eine erste Erfassungseinrichtung und/oder erste Sensoreinrichtung, die der Erfassung einer Auslenkung und/oder Winkel- oder Drehlage und/oder Höhenveränderung des Trägers und/oder der Werkzeugeinheit dient, womit insbesondere eine sensorische Erfassung der Auslenkung, der Winkellage und/oder der Höhenveränderung des Trägers und/oder der Werkzeugeinheit gemeint ist.

Wenn hier oder an anderer Stelle von einer Winkellage oder von einer Drehlage gesprochen wird, so sind diese Begriffe grundsätzlich synonym zu verstehen, denn jede Änderung einer Drehlage eines dreh- oder verschwenkbar gelagerten Elements oder Bauteils führt gleichzeitig zu einer geänderten Winkellage, d.h. zu einem geänderten Winkel zwischen dem Lagerbauteil und dem daran gelagerten Bauteil.

Als erste Erfassungseinrichtung oder erste Sensoreinrichtung kann sich etwa eine relativ einfach aufgebaute, optisch arbeitende Winkelmesseinrichtung, ein Winkelsensor mit Drehpotentiometer, ein induktiv arbeitender Winkel- oder Wegsensor, ein Winkel- oder Wegsensor mit Hall-Geber o. dgl. eignen, da hiermit auf einfachem und zuverlässigem Wege Auslenkungen, Winkellagen, aber auch relative Höhenveränderungen von mindestens zwei Bauteilen zueinander erfasst werden können.

Eine zweite Erfassungseinrichtung und/oder zweite Sensoreinrichtung dient der Erfassung eines aktuellen Abstandes eines Referenzbauteils der landwirtschaftlichen Maschine zum Boden und/oder zur Erfassung einer aktuellen Winkellage eines Referenzbauteils der landwirtschaftlichen Maschine im Raum, womit wiederum insbesondere eine sensorische Erfassung des aktuellen Abstandes des Referenzbauteils zum Boden und/oder der aktuellen und/oder veränderlichen Winkellage und/oder der Höhenlage des Referenzbauteils der landwirtschaftlichen Maschine im Raum gemeint ist.

Wenn an dieser und an anderen Stellen der Begriff des "Raumes" verwendet und von einer Lagebestimmung "im Raum" die Rede ist, so meint dies in aller Regel eine Lageerfassung und -bestimmung durch Ermittlung einer irgendwie gearteten räumlichen Beziehung mehrerer Teile, Bauteile, Maschinenteile oder der gesamten Maschine. Der Raum in diesem Sinne kann etwa durch quasiabsolute Koordinaten definiert sein, wie sie etwa durch satellitengestützte Sensorsysteme ermittelt und zur Verfügung gestellt werden können. Als Raum in diesem Sinne kommen jedoch auch relative Koordinaten in Frage, die etwa durch einen Abstand eines definierten Maschinenbauteils (z.B. eines Referenzbauteils) zum Ackerboden charakterisiert sein können, und/oder die durch eine Definition der Lage eines Maschinenbauteils (z.B. Referenzbauteils) zum Ackerboden und/oder gegenüber einem weiteren Maschinenbauteil (z.B. Bezugsbauteil) charakterisiert sein können.

Als zweite Erfassungseinrichtung oder zweite Sensoreinrichtung kann sich etwa ein optisch arbeitender Distanzmesser eignen, der auf einer elektrooptischen Entfernungsmessung basiert. Wird ein solcher Distanzmesser als Sensoreinrichtung an einem höhenbeweglichen Bauteil der landwirtschaftlichen Maschine, dessen Abstand zum Boden sich verändert und gemessen werden soll, montiert, so lässt sich mit einer solchen elektrooptischen Entfernungsmesseinrichtung permanent oder in zyklischen Abständen eine Distanz zum Untergrund oder Ackerboden erfassen.

Anstelle einer elektrooptischen Entfernungsmessung eignen sich gleichermaßen Verfahren, die mit elektromagnetischen Wellen in anderen Wellenlängenbereichen arbeiten, so etwa Ultraschall-Messverfahren oder Radar-Messverfahren.

Alle diese hier genannten Messverfahren können wahlweise auf einer Laufzeitmessung ausgesendeter Signale, auf einer Phasenlagenmessung oder bspw. auch einer Triangulationsmessung basieren. Denkbar ist bei Verwendung von Wellensignalen (z.B. Laserlicht; Laserinterferometer) bspw. auch eine Überlagerungsmessung, bei der keine absoluten Weglängen gemessen werden, sondern relative Änderungen bei Verschiebungen des Ziels oder eines Spiegels. Bei einer solchen Verschiebung eines Reflektors - dies kann etwa auch der Boden sein - wird die Summe aus ausgesandtem und reflektiertem Strahl periodisch moduliert, was auch als Interferenz betrachtet werden kann. Durch Zählung der Wellenlängenperioden und multiplikatorische Verknüpfung mit der Strahlungswellenlänge kann die gesuchte Wegstrecke errechnet werden.

Soll mit der zweiten Erfassungs- oder Sensoreinrichtung dagegen konkret eine aktuelle Winkellage eines Referenzbauteils der landwirtschaftlichen Maschine im Raum erfasst werden, so kann hierfür in vorteilhafter Weise bspw. ein elektronisch arbeitender Winkel- oder Lagesensor oder bspw. auch ein Beschleunigungssensor eingesetzt werden. Solche Sensoren können z.B. als Piezosensoren ausgebildet sein, bei denen piezokeramische Sensorplättchen dynamische Druckschwankungen in elektrische Signale umwandeln, die entsprechend weiterverarbeitet werden können. Die Druckschwankungen werden durch eine an der Piezokeramik befestigte seismische Masse erzeugt, wodurch sie bei einer Beschleunigung des Gesamtsystems auf die Piezokeramik einwirken.

Sinnvollerweise werden jedoch zur sensorischen Erfassung der aktuellen und/oder veränderlichen Winkellage des Referenzbauteils der landwirtschaftlichen Maschine im Raum halbleiterbasierte Mikrosysteme eingesetzt, sog. mikro-elektro-mechanische Systeme. Durch beschleunigungsbedingte Auslenkungen kann eine sich verändernde elektrische Kapazität zwischen gefedert aufgehängten Teilen und einer festen Bezugselektrode gemessen werden. Auch andere Varianten können eingesetzt werden, etwa solche mit piezoresistiven Widerständen, die auf Biegebalken angeordnet sind, so dass von einer entsprechenden Durchbiegung eine erfasste Beschleunigung ableitbar ist.

Als Sensoren zur Erfassung von Lage- und/oder Raumänderungen eignen sich zudem ähnliche Sensoren in sog. MEMS-Technik (mikro-elektro-mechanische Systeme), die nicht nur für die Messung von linearen Beschleunigung ausgestattet sind, sondern für die Messung von Winkelgeschwindigkeiten. Hierbei handelt es sich dann in der Regel um sogenannte Drehratensensoren oder Gyroskope.

Es ist für den Fachmann nachvollziehbar, dass die Montage eines solchen Drehratensensors oder Gyroskops auf einem lageveränderlichen Bauteil der landwirtschaftlichen Maschine und die Verarbeitung der von diesem Sensor gelieferten Signale bereits eine ständige Ermittlung von (absoluten oder quasiabsoluten) Raumkoordinaten erlaubt, wobei diese Raumkoordinaten insbesondere ganz definierte GPS-Koordinaten oder andere Referenzkoordinaten sein können, die eine räumliche Beziehung zu (nahezu beliebigen) anderen Orten, Gegenständen oder Referenzkoordinaten herstellen und/oder ableiten lassen.

Werden die Signale jedoch mit Sensorsignalen weiterer Drehraten- oder Lagesensoren verglichen, welche weiteren Drehraten- oder Lagesensoren an anderen Maschinenbauteilen befestigt sind, und/oder werden die Signale darüber hinaus mit z.B. Sensorsignalen von satellitengestützten Sensorsystemen verglichen oder überlagert, so lassen sich nahezu beliebig genaue Ortsinformationen, Lageinformationen und dynamische Rauminformationen für sich bewegende und/oder für zueinander bewegliche Maschinenbauteile oder -elemente ermitteln.

Ergänzend sei darauf hingewiesen, dass es durchaus auch sinnvoll sein kann, ähnliche oder gleiche Messprinzipien für erste und zweite Erfassungs- und/oder Sensoreinrichtungen einzusetzen. So kann bspw. auch für die erste Erfassungs- oder Sensoreinrichtung ein Drehratensensor oder Gyroskop eingesetzt werden, auch wenn die hierbei ermittelten Sensorwerte nicht zwingend in der gelieferten Hochauflösung benötigt werden.

Das hier ganz allgemein so bezeichnete Referenzbauteil, das insbesondere zur Ermittlung von Raumkoordination vorgesehen ist, kann bspw. der Maschinenrahmen sein. Allerdings ist der Begriff allgemein und grundsätzlich weit gefasst zu verstehen und soll verdeutlichen, dass mit dem hier verwendeten Begriff des Referenzbauteils in erster Linie ausgedrückt werden soll, dass es sich um ein Bauteil der Maschine handelt, deren Koordinaten, d.h. zweckmäßig der Lage bspw. gegenüber einem Ackerboden bekannt oder zumindest leicht bestimmbar sind und das sich für eine Lage- und/oder Winkelbestimmung gut eignet, um daraus die gewünschten Messwerte abzuleiten.

Wenn im vorliegenden Zusammenhang von bekannten Koordinaten die Rede ist, so zielt dies insbesondere auf gegebene oder bekannte geometrische Zusammenhänge der landwirtschaftlichen Maschine ab. Das Prinzip der hier verwendeten Messdatenerfassung und -verarbeitung beruht insbesondere darauf, dass auf Basis der jeweiligen räumlichen Lage des Maschinenrahmens (z.B. gegenüber dem Ackerboden) und anhand der bekannten Maschinengeometrie, d.h. den Maßen der Maschine, den Abständen unterschiedlicher Elemente und Baugruppen etc., und auf Grundlage der ermittelten Sensordaten der ersten Erfassungs- und/oder Sensoreinrichtung eine exakte Arbeitstiefe bestimmt und definiert werden kann.

In verkürzter Form kann auch davon gesprochen werden, dass mittels der ersten Erfassungseinrichtung oder der ersten Sensoreinrichtung räumliche Beziehungen von mindestens zwei relativ zueinander beweglichen Maschinenkomponenten erfasst werden, was auch als untergeordnete Sensorik oder als sensorische Untergruppe bezeichnet werden könnte, während die zweite Erfassungseinrichtung und/oder zweite Sensoreinrichtung irgendeinem Bauteil der landwirtschaftlichen Maschine, das bereits über die erste Erfassung- und/oder Sensoreinrichtung mit anderen Bauteilen in Beziehung gesetzt ist, zugeordnet sein kann.

Die Lage und/oder die räumlichen Koordinaten dieses Bauteils, dem die zweite Erfassungs- und/oder Sensoreinrichtung zugeordnet ist, werden erfasst, wodurch die mindestens eine zweite Sensor- oder Erfassungseinrichtung als übergeordnete Sensorik oder als Globalsensorik bezeichnet werden könnte. Wenn somit die zweite Erfassungs- und/oder Sensoreinrichtung in erster Linie die Maschinenlage (z.B. Lage des Referenzbauteils und/oder Bezugsbauteils) oder die Maschinenkoordinaten erfassen kann, so ist durch die bekannte Positionierung der zweiten Erfassungs- und/oder Sensoreinrichtung an einem definierten Maschinenbauteil eine Beziehung zur ersten Erfassungs- und/oder Sensoreinrichtung und damit zu weiteren Maschinenbauteilen herstellbar, woraus letztlich die veränderliche Arbeitstiefe und/oder der Auflagedruck der mindestens einen Werkzeugeinheit zu jedem Zeitpunkt ermittelt werden kann/können.

Rein vorsorglich sei an dieser Stelle darauf hingewiesen, dass die in der vorliegenden Beschreibung gebrauchten Begriffe der Erfassungseinrichtungen sowie der Sensoreinrichtungen normalerweise synonym zu verstehen sind, da sowohl die Erfassungseinrichtungen als auch die Sensoreinrichtungen der Messdatengewinnung aus Lageänderungen, aus Winkeländerungen oder aus anderen Messdatenerfassungen im Zusammenhang mit der relativen Lage mindestens zweier Bauteile der landwirtschaftlichen Maschine und/oder im Zusammenhang mit Lage- und Ausrichtungsänderungen mindestens eines Bauteils der Maschine im Raum dienen sollen.

In einer mit der ersten Erfassungseinrichtung sowie mit der zweiten Erfassungseinrichtung wirkverbundenen und die Messwerte der Erfassungseinrichtungen empfangenden und verarbeitenden Signalverarbeitungs- und Steuereinrichtung sind Sollwerte hinterlegt, die sich insbesondere auf die Arbeitstiefe und/oder den Auflagedruck beziehen. Durch die Signalverarbeitungs- und Steuereinrichtung werden Steuersignale für den Verstellmechanismus generiert, und zwar mittels Abgleich der von den Erfassungseinrichtungen gelieferten Messwerte mit den genannten Sollwerten, die sich insbesondere auf die Arbeitstiefe und/oder den Auflagedruck der Werkzeugeinheit beziehen. Auf diese Weise können durch von der Signalverarbeitungs- und Steuereinrichtung vorgegebene Stellsignale für den Verstellmechanismus geeignete Winkel- und/oder Höhenverstellungen des Trägers gegenüber dem Maschinenrahmen vorgegeben werden, wodurch eine Annäherung der Arbeitstiefe und/der des Auflagedrucks an die angestrebten Sollwerte ermöglicht ist.

Ein Hinterlegen von Sollwerten kann bspw. durch manuelle Eingabe, bspw. durch eine Bedienperson erfolgen. Alternativ oder ergänzend kann ein Hinterlegen von Sollwerten auch durch ein Abrufen von bspw. einer Datenbank erfolgen.

Es sei an dieser Stelle klarstellend auf folgende Zusammenhänge hingewiesen: wenn hier oder an anderer Stelle der vorliegenden Beschreibung von einer Signalverarbeitungseinrichtung und/oder von einer Steuer- oder Steuerungseinrichtung die Rede ist, so kann damit gleichermaßen eine Datenverarbeitungseinrichtung gemeint sein, da eine Datenverarbeitungseinrichtung grundsätzlich unterschiedlichste Daten verarbeiten kann, so etwa auch Sensorsignale. Zudem können Datenverarbeitungseinrichtungen bestimmter Ausprägung auch als Steuerungseinrichtungen betrachtet werden, sofern sie aus der Verarbeitung der Eingangsdaten bestimmte Steuersignale generieren.

Ergänzend sei an dieser Stelle darauf hingewiesen, dass sich die vorliegende Erfindung sowohl auf eine Schardruckregelung als auch auf eine Sätiefenregelung beziehen bzw. diese umfassen kann, ebenso auf eine Werkzeugdruck- oder Werkzeugtiefenregelung. Dabei ist zusätzlich zu berücksichtigen, dass sich durch eine Veränderung des Schardrucks normalerweise auch eine Sätiefe mit verändern kann, und dass sich zudem durch eine Veränderung der Sätiefe auch ein Schardruck verändern kann, d.h. die beiden zu beeinflussenden Größen sind jeweils voneinander abhängig und können einander bedingen. Ob nun mittels der erfindungsgemäßen landwirtschaftlichen Maschine eher ein konstanter Schardruck oder eine konstante Sätiefe angestrebt und die entsprechende Regelung durchgeführt wird, ist demnach insbesondere abhängig von der Art der verwendeten Sensorik. Als vorteilhaft hat sich jedoch insbesondere eine Regelung auf eine gewünschte Sätiefe herausgestellt, da eine gleichmäßige Sätiefe das wesentliche Ziel der meisten der sog. "AutoForce"-Systeme ist.

Die vorliegende Erfindung kann bei vielen landwirtschaftlichen Bodenbearbeitungsmaschinen, insbesondere bei landwirtschaftlichen Verteilmaschinen zum Einsatz kommen, und zwar insbesondere bei Maschinen zur Aussaat von landwirtschaftlichen Verteilgütern wie Saatgut, Dünger oder dergl., wobei die Verteilgüter sowohl in granularer als auch in flüssiger Form vorliegen können.

Es ist möglich, dass die erfindungsgemäße landwirtschaftliche Maschine bzw. die Verteilmaschine zwei oder mehr Träger umfasst, welche zudem nebeneinander und/oder hintereinander an der Verteilmaschine angebracht sein können.

Am Träger ist gemäß einer Ausführungsvariante der erfindungsgemäßen landwirtschaftlichen Maschine oder Bodenbearbeitungsmaschine zumindest ein Säschar angebaut; insbesondere sind am Träger beabstandet zueinander mehrere Säschare angebaut, wobei dieser Abstand auch als sog. Strichabstand bezeichnet werden kann. Gemäß der vorliegenden Erfindung werden die Säschare insbesondere in einem Strichabstand zueinander angeordnet welcher kleiner ist als 50 cm oder kleiner ist als 30 cm und im Wesentlichen 15cm betragen kann.

Es ist zudem möglich, dass an den Trägern verschiedene Säschare angebracht sind, so dass bspw. nebeneinander kurze und lange Säschare angebracht sein können. Es ist auch möglich das die Verteilmaschine mehrere Träger umfasst, insbesondere mehrere hintereinander angeordnete Träger, wobei an den Trägern gleiche und/oder wiederum unterschiedliche Säschare (z.B. lange und kurze) angebracht sein können. Die Säschare können bspw. jeweils mittels eines Parallelogramms am Träger angebracht sein.

Um ein sicheres Eindringen der Säschare in einer landwirtschaftlichen Fläche bzw. Acker- oder Bodenfläche zu gewährleisen und um somit sicherzustellen, dass eine entsprechende Saatfurche mittels des Säschare erzeugt wird, werden die Säschare mit einer definierten und/oder definierbaren Vorspannkraft entlang einer landwirtschaftlichen Fläche geführt. Zur Erzeugung dieser Vorspannkraft sind die Schare bspw. mittels einer elastischen Lagerung bzw. mittels elastischer Lagerelemente am Träger angebaut, respektive gelagert, insbesondere schwenkbar gelagert. Als elastische Lagerelemente können vorzugsweise sogenannte Gummischnurlagerungen (z.B. Elastomerlager) eingesetzt werden.

Um eine Sätiefe und/oder einen Schardruck bzw. eine auf das Säschar oder dessen Komponenten wirkende Kraft anpassen, z.B. steuern oder voreinstellen zu können, kann der Träger gegenüber einem Maschinenrahmen bzw. gegenüber einer Acker- oder Bodenfläche verdreht werden und/oder in seiner Höhe verstellt werden. Insbesondere kann der Träger und somit das Säschar in seiner/dessen Lage (z.B. Drehlage und/oder Höhenlage) gegenüber einer Acker- oder Bodenfläche bzw. gegenüber einem Maschinenrahmen verändert werden.

Der Erfindung, d.h. der erfindungsgemäß ausgestatteten landwirtschaftlichen Maschine sowie dem erfindungsgemäßen Verfahren zum Steuern und/oder Regeln eines Auflagedrucks und/oder einer Arbeitstiefe - dies kann je nach Ausprägung der landwirtschaftlichen Maschine bspw. eine Saattiefe sein - einer Werkzeugeinheit einer solchen landwirtschaftlichen Maschine, liegt die Erkenntnis zu Grunde, dass es mitunter nicht ausreicht, nur einen Winkel eines Säschares gegenüber einem Maschinenrahmen zu erfassen oder einen Schardruck (bzw. auf das Säschar wirkende Kraft) zu erfassen, da es vorkommen kann, dass zwar der Winkelwert passt, eine Sätiefe ggf. jedoch dennoch nicht, was in der Regel bspw. durch ein Versinken der gesamten Maschine in eine Ackerfläche hervorgerufen wird, oder was bspw. durch einen derartig hohen Schardruck hervorgerufen werden kann, dass gleichsam die gesamte Maschine mittels der Säschare schon ausgehoben wird, insbesondere jedoch bspw. der Packer schon ausgehoben wird. Dementsprechend wird es als wichtiger Aspekt der vorliegenden Erfindung gesehen, jeweils zwei, zweckmäßig insbesondere unterschiedliche Messgrößen, zu erfassen, und anhand dieser eine Sätiefenregelung und/oder eine Schardruckregelung durchzuführen.

Erfindungsgemäß ist somit insbesondere vorgesehen, neben bspw. einer Lage (z.B. Drehlage und/oder Höhenlage) des Säschares gegenüber einem Maschinenrahmen (z.B. Referenzbauteil und/oder Bezugsbauteil) bzw. einer Bodenfläche (z.B. Ackerboden) zudem die Lage (z.B. wiederum Drehlage und/oder Höhenlage) des Maschinenrahmen gegenüber einer Bodenfläche (z.B. Ackerboden) zu erfassen.

Auch kann erfindungsgemäß vorgesehen sein, sowohl die Lage des Säschars gegenüber der Acker- oder Bodenfläche als auch die Lage des Maschinenrahmens gegenüber der Acker- oder Bodenfläche zu ermitteln. Auch andere Messungen wären denkbar, wie nachfolgend noch beschrieben wird.

Der Kern der Erfindung liegt demnach neben anderen Aspekten darin, die zur Steuerung und/oder Regelung verwendeten Messgrößen dadurch zu optimieren, dass zwei unterschiedlichen Messgrößen verwendet werden, die bei der Auswertung unterschiedlich gewichtet werden können.

Gemäß einer weiteren Ausführungsvariante der erfindungsgemäßen landwirtschaftlichen Maschine oder Bodenbearbeitungsmaschine können am Träger auch andere Bodenbearbeitungswerkzeuge angebracht sein, etwa Zinkenschare oder Scheibeneggen o. dgl., die insbesondere nachfolgenden Säscharen vorgeordnet sein können und in erster Linie der Vorbereitung des Saatbetts durch Zerkleinerung des Erdreichs und Einebnung des Ackerbodens dienen können. Das zuvor Beschriebene gilt somit in gleicher Weise für solche Bodenbearbeitungswerkzeuge, die Teil einer komplexeren landwirtschaftlichen Maschine sein können.

Auch bei diesen Werkzeugen ist es sinnvoll, sie mit einer definierten und/oder definierbaren Vorspannkraft entlang der zu bearbeitenden landwirtschaftlichen Fläche zu führen. Zur Erzeugung dieser Vorspannkraft sind die Werkzeuge bspw. mittels einer elastischen Lagerung bzw. mittels elastischer Lagerelemente am Träger angebaut, respektive gelagert, insbesondere schwenkbar gelagert. Als elastische Lagerelemente können vorzugsweise sogenannte Gummischnurlagerungen (z.B. Elastomerlager) eingesetzt werden.

Um eine Eingriffstiefe (z.B. Arbeitstiefe) und/oder einen definierten Eingriffsdruck (z.B. Schardruck) bzw. eine auf die Bodenbearbeitungswerkzeuge oder deren Komponenten wirkende Kraft anpassen, z.B. steuern oder voreinstellen zu können, kann der Träger gegenüber einem Maschinenrahmen bzw. gegenüber einer Acker- oder Bodenfläche verdreht werden und/oder in seiner Höhe verstellt werden. Insbesondere kann der Träger und somit die daran angeordneten Scheiben- oder Zinkenwerkzeuge in seiner Lage (z.B. Drehlage und/oder Winkellage und/oder Höhenlage) gegenüber einer Bodenfläche (z.B. Ackerboden) bzw. gegenüber einem Maschinenrahmen (z.B. Referenzbauteil, Bezugsbauteil) verändert werden.

Auch der hier beschriebenen Ausführungsvariante der vorliegenden Erfindung, d.h. der erfindungsgemäß ausgestatteten landwirtschaftlichen Maschine sowie dem erfindungsgemäßen Verfahren zum Steuern und/oder Regeln eines Auflagedrucks und/oder einer Arbeitstiefe (z.B. Saattiefe) einer Werkzeugeinheit einer solchen landwirtschaftlichen Maschine, liegt wiederum die Erkenntnis zu Grunde, dass es mitunter nicht ausreicht, nur einen Winkel eines Bodenbearbeitungswerkzeuges gegenüber einem Maschinenrahmen zu erfassen oder einen Schardruck (bzw. auf die Scheibeneggen oder Zinkenschare wirkende Kraft) zu erfassen, da es vorkommen kann, dass zwar der Winkelwert passt, eine Eingriffstiefe ggf. jedoch dennoch nicht, was in der Regel durch bspw. ein Versinken der gesamten Maschine in eine Ackerfläche hervorgerufen wird, oder was bspw. durch einen derartig hohen Schardruck oder Eingriffsdruck der Werkzeuge hervorgerufen werden kann, dass gleichsam die gesamte Maschine mittels der Scheiben- oder Zinkenschare schon ausgehoben wird, insbesondere jedoch bspw. der Packer schon ausgehoben wird. Dementsprechend wird es als wichtiger Aspekt der vorliegenden Erfindung gesehen, jeweils zwei, zweckmäßig insbesondere unterschiedliche Messgrößen, zu erfassen, und anhand dieser eine Werkzeugtiefenregelung und/oder eine Schardruckregelung durchzuführen.

Erfindungsgemäß ist somit insbesondere vorgesehen, neben bspw. einer Lage (z.B. Drehlage und/oder Winkellage und/oder Höhenlage) des Eingriffs- oder Bodenbearbeitungswerkzeuges (bspw. Scheibenschar, Zinkenschar o. dgl.) gegenüber einem Maschinenrahmen bzw. einer Acker- oder Bodenfläche zudem die Lage (z.B. wiederum Drehlage und/oder Winkellage und/oder Höhenlage) des Maschinenrahmen gegenüber einer Acker- oder Bodenfläche zu erfassen. Auch kann erfindungsgemäß vorgesehen sein, sowohl die Lage des Bodenbearbeitungswerkzeuges gegenüber der Bodenfläche (z.B. Ackerfläche) als auch die Lage des Maschinenrahmens gegenüber der Acker- oder Bodenfläche zu ermitteln.

Wie bereits oben dargelegt, liegt der Kern der Erfindung demnach neben anderen Aspekten darin, die zur Steuerung und/oder Regelung verwendeten Messgrößen dadurch zu optimieren, dass zwei unterschiedlichen Messgrößen verwendet werden, die bei der Auswertung unterschiedlich gewichtet werden können.

Gemäß einer Ausführungsvariante der erfindungsgemäßen landwirtschaftlichen Arbeitsmaschine kann die oben erläuterte erste Erfassungseinrichtung - dies kann ein geeigneter Sensor sein - dem Träger und/oder dem Maschinenrahmen zugeordnet sein, so dass die erste Erfassungseinrichtung eine Winkellage des Trägers mit der daran angeordneten Werkzeugeinheit gegenüber dem Maschinenrahmen erfassen und daraus entsprechende Messwerte generieren kann.

Wahlweise kann die erste Erfassungseinrichtung oder die erste Sensoreinrichtung dem Träger und/oder dem Maschinenrahmen zugeordnet sein und in einer Weise arbeiten, dass die erste Erfassungseinrichtung eine Höhenveränderung des Trägers mit der daran angeordneten Werkzeugeinheit gegenüber dem Maschinenrahmen erfasst und daraus entsprechende Messwerte generiert.

Ebenso denkbar ist es, dass die erste Erfassungseinrichtung oder die erste Sensoreinrichtung der Werkzeugeinheit und/oder dem Träger zugeordnet ist, und dass die erste Erfassungseinrichtung oder die erste Sensoreinrichtung eine auf die Werkzeugeinheit und/oder den Träger wirkende mechanische Kraft erfasst und daraus entsprechende Messwerte generiert. Hierbei kann als Erfassungseinrichtung bspw. ein geeigneter Spannungssensor wie etwa ein Dehnmessstreifen o. dgl. eingesetzt werden, der an einer geeigneten Stelle der Werkzeugeinheit oder des Trägers abgebracht sein kann, um die auf das jeweilige Teil wirkende mechanische Durchbiegung zu erfassen und daraus auf die wirkenden Kräfte zu schließen.

Eine weitere Option kann darin bestehen, dass die erste Erfassungseinrichtung oder die erste Sensoreinrichtung dem Verstellmechanismus zugeordnet ist und einen Steuerdruck eines fluidisch wirkenden Aktors erfasst, der einen Teil des Verstellmechanismus bildet. Hierbei kann die Erfassungseinrichtung etwa durch einen Drucksensor gebildet sein.

Wahlweise kann die erste Erfassungseinrichtung oder die erste Sensoreinrichtung dem Verstellmechanismus in einer Weise zugeordnet sein, dass eine Verstellung des Trägers mit der daran angeordneten Werkzeugeinheit gegenüber dem Maschinenrahmen erfasst und daraus entsprechende Messwerte generiert werden, was etwa durch einen Winkelsensor wie ein Winkelpotentiometer o. dgl. ermöglicht werden kann.

Eine weitere Ausführungsvariante der landwirtschaftlichen Arbeitsmaschine kann vorsehen, dass die erste Erfassungseinrichtung wenigstens einen der Werkzeugeinheit und/oder dem Träger zugeordneten Neigungssensors umfasst oder durch einen solchen Neigungssensor gebildet ist, welcher eine aktuelle Winkellage des Trägers und/oder der Werkzeugeinheit im Raum erfasst und daraus entsprechende Messwerte generiert. Wahlweise kann die erste Erfassungseinrichtung auch einen der Werkzeugeinheit und/oder dem Träger zugeordneten Beschleunigungssensor umfassen, welcher eine aktuelle Winkellage des Trägers und/oder der Werkzeugeinheit im Raum erfasst und daraus entsprechende Messwerte generiert.

Unabhängig von der jeweils eingesetzten Sensorkonfiguration ermöglicht es die landwirtschaftliche Arbeitsmaschine, aus den gemessenen Kraft- und/oder Druckwerten oder aus den gemessenen Neigungs- und/oder Beschleunigungswerten eine Auslenkung und/oder Winkellage und/oder Höhenveränderung des Trägers und/oder der Werkzeugeinheit gegenüber dem Maschinenrahmen zu errechnen.

Weiterhin umfasst die erfindungsgemäße landwirtschaftliche Arbeitsmaschine die oben bereits erwähnte zweite Erfassungseinrichtung oder die erwähnte zweite Sensoreinrichtung, die einem Bauteil, insbesondere einem Referenzbauteil der landwirtschaftlichen Arbeitsmaschine zugeordnet sein kann, und die auf diese Weise einen aktuellen Abstand des Referenzbauteils zum Boden und/oder eine aktuelle Winkellage des Referenzbauteils im Raum erfassen und daraus entsprechende Messwerte generieren kann.

Wahlweise kann die zweite Erfassungseinrichtung oder die zweite Sensoreinrichtung dem Maschinenrahmen zugeordnet sein und mittels eines auf der Erfassung reflektierter elektromagnetischer Wellen basierenden Messprinzips einen aktuellen Abstand des Maschinenrahmens (z.B. des Referenzbauteils) zum Boden (z.B. zum Ackerboden) erfassen und daraus entsprechende Messwerte generieren.

Ebenso denkbar ist es, dass die zweite Erfassungseinrichtung oder die zweite Sensoreinrichtung durch wenigstens einen dem Maschinenrahmen zugeordneten Neigungssensor gebildet ist, der eine aktuelle Winkellage des Maschinenrahmens und/oder des Referenzbauteils der Arbeitsmaschine im Raum erfasst, woraus die Rechnereinheit durch Abgleich der Messwerte der ersten Erfassungseinrichtung eine aktuelle Arbeitstiefe (z.B. Saattiefe) und/oder einen aktuellen Auflagedruck errechnen kann.

Weiterhin kann es eine sinnvolle Option sein, wenn die zweite Erfassungseinrichtung oder die zweite Sensoreinrichtung durch wenigstens einen dem Maschinenrahmen zugeordneten Beschleunigungssensor gebildet ist, der eine aktuelle Winkellage des Maschinenrahmens und/oder des Referenzbauteils der Arbeitsmaschine im Raum erfasst, woraus die Rechnereinheit durch Abgleich der Messwerte der ersten Erfassungseinrichtung eine aktuelle Arbeitstiefe (z.B. Saattiefe) und/oder einen aktuellen Auflagedruck errechnen kann.

Bei der erfindungsgemäßen landwirtschaftlichen Arbeitsmaschine kann der Verstellmechanismus zur Lageänderung des Trägers bspw. eine motorische Stelleinrichtung aufweisen, etwa in Gestalt eines Stellzylinders o. dgl., die durch Vorgaben der Rechnereinheit ansteuerbar ist. Als motorisch betriebene Stelleinrichtung oder als motorischer Antrieb für den Stellzylinder oder ggf. auch für mehrere Stellzylinder kann eine fluidische Druckbeaufschlagung, etwa in Gestalt hydraulischen und/oder pneumatischen Drucks, oder bspw. auch ein elektromotorischer oder ein anderes Antriebsprinzip in Frage kommen.

Der Verstellmechanismus kann bspw. auch durch doppeltwirkende Stellzylinder o. dgl. gebildet sein, wodurch es etwa auch ermöglicht werden kann, die Werkzeugeinheiten gegenüber einer Ackerfläche anzuheben und/oder einen Auflagedruck der Werkzeugeinheiten gezielt zu verringern.

Der Träger kann insbesondere mittels des Verstellmechanismus mittels einer quer zu einer Vorwärtsrichtung der Arbeitsmaschine orientierten Achse drehbar gegenüber dem Maschinenrahmen gelagert und/oder höhenverstellbar gegenüber dem Maschinenrahmen gelagert sein. Zudem ist normalerweise vorgesehen, dass die Werkzeugeinheit schwenkbar am Träger angebracht ist, wobei die schwenkbare Lagerung der Werkzeugeinheit zumindest ein Federelement umfassen kann, und wobei die Werkzeugeinheit mittels des zumindest einen Federelements mit definierter Vorspannkraft gegen eine Acker- oder Bodenfläche pressbar ist.

Zur Lösung der oben definierten Ausgabe schlägt die vorliegende Erfindung neben der in zahlreichen Ausführungsvarianten erläuterten landwirtschaftlichen Arbeitsmaschine auch ein Verfahren zum Steuern und/oder Regeln eines Auflagedrucks und/oder einer Arbeitstiefe (z.B. Saattiefe) einer Werkzeugeinheit einer landwirtschaftlichen Maschine, vorzugsweise einer landwirtschaftlichen Maschine zur Bodenbearbeitung und/oder Aussaat, vor, wobei diese landwirtschaftliche Maschine insbesondere eine solche sein kann, wie sie zuvor anhand von verschiedenen Ausführungsvarianten bereits beschrieben wurde.

Die für das hier beschriebene Verfahren eingesetzte oder vorteilhaft einsetzbare landwirtschaftliche Maschine umfasst einen Maschinenrahmen mit mindestens einem daran mittels eines Verstellmechanismus höhen- und/oder winkelverstellbar gelagerten Träger. An diesem Träger ist wenigstens eine Werkzeugeinheit angebracht, deren Auflagedruck auf den zu bearbeitenden Boden und/oder deren Arbeitstiefe (z.B. Saattiefe) in Abhängigkeit von einer mittels des Verstellmechanismus einstellbaren Lage des Trägers gegenüber dem Maschinenrahmen veränderbar ist.

Mit einer ersten Erfassungseinrichtung oder einer ersten Sensoreinrichtung kann eine Auslenkung und/oder Winkellage und/oder Höhenveränderung des Trägers und/oder der Werkzeugeinheit erfasst werden. Mittels einer zweiten Erfassungseinrichtung oder einer zweiten Sensoreinrichtung kann oder können ein aktueller Abstand eines Referenzbauteils der landwirtschaftlichen Arbeitsmaschine zum Boden und/oder eine aktuelle Winkellage eines Referenzbauteils der landwirtschaftlichen Arbeitsmaschine im Raum erfasst werden. Die von der ersten Erfassungseinrichtung sowie von der zweiten Erfassungseinrichtung jeweils gelieferten Messwerte werden an eine geeignete Signalverarbeitungs- und Steuereinrichtung übermittelt, welche die Messwerte verarbeitet und nach Abgleich mit Sollwerten, insbesondere für die Arbeitstiefe (z.B. Saattiefe) und/oder den Auflagedruck Steuersignale für den Verstellmechanismus generiert.

Das Verfahren kann bspw. vorsehen, dass mittels der ersten Erfassungseinrichtung eine Winkellage des Trägers mit der daran angeordneten Werkzeugeinheit gegenüber dem Maschinenrahmen (z.B. Referenzbauteil, Bezugsbauteil) erfasst wird.

Wahlweise kann bei dem Verfahren auch mittels der ersten Erfassungseinrichtung eine Höhenveränderung des Trägers mit der daran angeordneten Werkzeugeinheit gegenüber dem Maschinenrahmen (z.B. Referenzbauteil, Bezugsbauteil) erfasst werden.

Denkbar ist es auch, dass die erste Erfassungseinrichtung eine auf die Werkzeugeinheit und/oder den Träger wirkende mechanische Kraft erfasst, etwa durch Einsatz von Dehnmessstreifen als Sensoreinrichtungen.

Darüber hinaus oder alternativ kann das Verfahren auch vorsehen, dass die erste Erfassungseinrichtung einen Steuerdruck eines fluidisch wirkenden Aktors erfasst, der einen Teil des Verstellmechanismus bildet.

Weitere Varianten des Verfahrens sind denkbar, so etwa die Erfassung einer aktuellen Winkellage des Trägers und/oder der Werkzeugeinheit im Raum, was bspw. durch Ausbildung der ersten Erfassungseinrichtung durch einen Neigungssensor ermöglicht ist. Allerdings kann das Verfahren auch vorsehen, dass die erste Erfassungseinrichtung mittels wenigstens eines Beschleunigungssensors eine aktuelle Winkellage des Trägers und/oder der Werkzeugeinheit im Raum erfasst.

Es sei an dieser Stelle betont, dass die erste Erfassungseinrichtung nicht zwingend einem der konkret genannten Bauteile zugeordnet oder dort montiert sein muss. Vielmehr kann es auch sinnvoll sein, mittels wenigstens eines Neigungs- oder Beschleunigungssensors eine aktuelle Winkellage eines Referenzbauteils der Arbeitsmaschine im Raum zu erfassen, wobei als Referenzbauteil grundsätzlich die unterschiedlichsten Komponenten der landwirtschaftlichen Arbeitsmaschine in Frage kommen können.

Das Verfahren sieht vor, dass aus den gemessenen Kraft- und/oder Druckwerten oder aus den gemessenen Neigungs- und/oder Beschleunigungswerten eine Auslenkung und/oder Winkellage und/oder Höhenveränderung des Trägers und/oder der Werkzeugeinheit gegenüber dem Maschinenrahmen errechnet wird, woraus sowohl die Arbeits- oder Eindringtiefe der Werkzeugeinheit als auch deren Arbeitsdruck im Boden abgeleitet werden können.

Weiterhin verwendet das erfindungsgemäße Verfahren eine zweite Erfassungseinrichtung, wobei diese zweite Erfassungseinrichtung bspw. mittels eines auf der Erfassung reflektierter elektromagnetischer Wellen basierenden Messprinzips einen aktuellen Abstand des Maschinenrahmens zum Boden erfassen kann.

Eine mögliche Verfahrensvariante kann auch vorsehen, dass die zweite Erfassungseinrichtung mittels wenigstens eines Neigungssensors eine aktuelle Winkellage des Maschinenrahmens im Raum erfasst, woraus die Rechnereinheit durch Abgleich der Messwerte der ersten Erfassungseinrichtung eine aktuelle Arbeitstiefe (z.B. Saattiefe) und/oder einen aktuellen Auflagedruck errechnet.

Weiterhin kann die zweite Erfassungseinrichtung mittels wenigstens eines Beschleunigungssensors auch eine aktuelle Winkellage des Maschinenrahmens im Raum erfassen, woraus die Rechnereinheit durch Abgleich der Messwerte der ersten Erfassungseinrichtung eine aktuelle Arbeitstiefe (z.B. Saattiefe) und/oder einen aktuellen Auflagedruck errechnet.

Ganz allgemein kann auch gesagt werden, dass bei dem Verfahren die erste Erfassungseinrichtung mittels wenigstens eines Neigungs- oder Beschleunigungssensors eine aktuelle Winkellage eines Referenzbauteils der Arbeitsmaschine im Raum erfasst.

Das Verfahren kann zudem vorsehen, dass der Verstellmechanismus zur Lage- und/oder Winkeländerung des Trägers eine motorische Stelleinrichtung aufweist, wobei die Signalausgabe insbesondere eine Steuerung der motorischen Stelleinrichtung umfasst.

Das erfindungsgemäße Verfahren kann somit bspw. vorsehen, dass mittels der ersten Sensorvorrichtung eine auf Komponenten des Säschars wirkende Kraft erfasst wird, was bspw. der Schardruck sein kann. Hierzu kann z.B. ein Dehnungsmessstreifen vorgesehen sein, welcher bspw. eine auf einen Scharrahmen wirkende Kraft misst oder eine auf eine Sechscheibe oder eine Druckrolle wirkende Kraft, insbesondere auf deren Lagerstellen wirkende Kraft misst. Auch eine Messung einer auf den Träger wirkenden Kraft wäre denkbar, wobei wiederum anhand dieser Messdaten eine auf die Säschare wirkende Kraft ermittelt werden kann. Auch andere Arten und Positionen der bzw. zur Kraftmessung wären denkbar.

Zur Tiefenverstellung und/oder zur Anpassung eines Schardrucks, d.h. insbesondere zur Änderung der Lage, d.h. der Drehlage und/oder der Höhenlage des Schars, kann ein Aktuator vorgesehen sein, bspw. ein hydraulisch und/oder pneumatisch betätigter oder betätigbarer Zylinder. Der hier so bezeichnete Aktuator (gebildet z.B. durch einen motorisch oder durch einen hydraulisch und/oder pneumatisch betätigten oder betätigbaren Zylinder) kann somit die erwähnte Stelleinrichtung oder den erwähnten Verstellmechanismus bilden, oder er kann ein Bestandteil dieser Stelleinrichtung oder dieses Verstellmechanismus sein.

Gemäß einer weiteren Ausführungsvariante kann als erste Sensorvorrichtung z.B. ein Sensor vorgesehen sein kann der ausgebildet ist, einen Druck des Zylinders zu erfassen, wobei zudem anhand einer wirksamen Kolbenfläche des Zylinders und den entsprechenden Hebelverhältnissen wiederum eine auf die Komponenten eines Säschares wirkende Kraft, d.h. insbesondere der Schardruck ermittelt werden kann.

Alternativ kann auch ein Druck an einer anderen Position ermittelt respektive erfasst werden.

Anhand einer auf das Säschar wirkenden Kraft, kann wiederum auf eine Position eines Säschar gegenüber einer Ackerfläche (z.B. Bodenfläche) geschlossen werden, bspw. auf eine Saattiefe.

Um zu erfassen ob die landwirtschaftliche Maschine (z.B. der Packer) bspw. in eine Bodenfläche (z.B. Ackerfläche) eingesunken ist oder von einer landwirtschaftlichen Zugmaschine oder durch eigene Fahrwerkskomponenten ausgehoben ist oder um zu erfassen, ob diese ggf. quer zur Fahrtrichtung oder in Fahrtrichtung geneigt ist, kann insbesondere eine zweite Sensorvorrichtung vorgesehen sein.

Für die zweite Sensorvorrichtung denkbar wäre bspw. ein einem Maschinenrahmen zugeordneter Neigungssensor, vorzugsweise ein Neigungssensor mit Beschleunigungskompensation, wodurch auf den Neigungssensoren wirkende Querbeschleunigungen rausgerechnet werden können.

Denkbar wäre auch ein Abstandssensor, mittels welchem bspw. Abstände eines Maschinenrahmens gegenüber einer Acker- oder Bodenfläche erfasst werden können. Als Abstandssensor kann bspw. ein Ultraschallsensor eingesetzt werden. Auch mehrere Abstandsensoren, insbesondere an verschiedenen Positionen des Maschinenrahmens wären denkbar. Derartige Abstandsensoren wären zudem auch als erste Sensoranordnung denkbar bzw. einsetzbar.

Denkbar wäre darüber hinaus bspw. auch ein Winkelsensor, der eine Neigung eines Säschares gegenüber einer Ackerfläche bzw. einem Maschinenrahmen (z.B. Referenzbauteil) erfasst.

Auch am Säschar, insbesondere bspw. an einem Scharrahmen, könnte ein Neigungssensor angebracht sein.

Es sei darauf hingewiesen, dass alle im Zusammenhang mit der ersten Sensorvorrichtung aufgeführten Sensoren auch für die zweite Sensorvorrichtung verwendet werden können. Umgekehrt gilt das gleiche, so dass auch alle in Verbindung mit der zweiten Sensorvorrichtung genannten Sensoren auch für die erste Sensorvorrichtung verwendet werden können.

Es wäre auch denkbar, dass die erste Sensorvorrichtung und die zweite Sensorvorrichtung jeweils durch gleiche Sensoren gebildet werden, welche jedoch jeweils unterschiedliche Eigenschaften messen können. Bspw. könnten hier zwei Neigungssensoren verwendet werden, wobei bspw. ein Neigungssensor eine Neigung eines Maschinenrahmen, insbesondere gegenüber einer Horizontalen und/oder einer Richtung der Erdbeschleunigung misst und wiederum ein zweiter Neigungssensor welcher bspw. eine Neigung eines Säschares gegenüber einem Maschinenrahmen misst oder welcher wiederum eine Neigung eines Säschares gegenüber einer Horizontalen und/oder einer Richtung der Erdbeschleunigung misst.

Es sei zudem darauf hingewiesen, dass gemäß vorliegender Erfindung am Säschar angebrachte Sensoren bspw. auch am Träger angebracht sein können.

Die Maschine kann zumindest eine Sektion aufweisen, welche sich im Wesentlichen aus einem Träger und zumindest einem an diesem angebrachten Säschar zusammensetzt, wobei die Sektion zudem zumindest eine erste Sensoreinrichtung und/oder eine zweite Sensoreinrichtung umfasst oder mit dieser gekoppelt ist.

Die Maschine kann zudem mehrere Sektionen (Anzahl Sektionen bspw. abhängig von Arbeitsbreite und von Anzahl von hintereinander angeordneten Trägern) umfassen, wobei jeweils jeder Sektion zumindest eine erste Sensorvorrichtung und/oder einer zweite Sensorvorrichtung zugeordnet und/oder mittels dieser gekoppelt ist oder mittels einer Steuerungseinrichtung oder mittels einer Datenverarbeitungseinrichtung mit dieser Sektion gekoppelt ist.

Wenn hier oder an anderer Stelle der vorliegenden Beschreibung von einer Datenverarbeitungseinrichtung die Rede ist, so ist damit gleichermaßen eine Signalverarbeitungs- und/oder Steuerungseinrichtung gemeint, da eine Datenverarbeitungseinrichtung grundsätzlich unterschiedlichste Daten verarbeiten kann, so etwa auch Sensorsignale. Zudem können Datenverarbeitungseinrichtungen bestimmter Ausprägung auch als Steuerungseinrichtungen betrachtet werden, sofern sie aus der Verarbeitung der Eingangsdaten bestimmte Steuersignale generieren.

Um das Messergebnis zu verbessern, kann insbesondere vorgesehen sein, dass jedem Säschar einer Sektion zumindest eine erste Sensorvorrichtung oder eine zweite Sensorvorrichtung zugeordnet ist.

Es ist möglich dass jeder Sektion zumindest ein Aktuator (z.B. Stell- oder Verstelleinrichtung) zugeordnet ist, es wäre jedoch auch denkbar, dass einer Sektion zwei oder mehr Aktuatoren zugeordnet sind.

Es wäre zudem denkbar, dass mittels eines Aktuator sowohl eine Drehlage als auch eine Höhenlage des Trägers veränderbar ist, insbesondere kann jedoch vorgesehen sein, dass sowohl für die Drehlage als auch für die Höhenlage jeweils ein separater Aktuator vorgesehen ist.

Wie oben bereits erläutert, kann der hier so bezeichnete und auch in der weiteren Beschreibung wiederholt genannte Aktuator (gebildet z.B. durch einen motorisch oder durch einen hydraulisch und/oder pneumatisch betätigten oder betätigbaren Zylinder) somit die erwähnte Stelleinrichtung oder den erwähnten Verstellmechanismus bilden, oder er kann ein Bestandteil dieser Stelleinrichtung oder dieses Verstellmechanismus sein.

Zur Verstellung einer Sätiefe kann insbesondere ein Träger, an welchem zumindest ein oder mehrere Säschare angebracht sein können, in dessen Lage, gegenüber einem Maschinenrahmen verstellt werden. Insbesondere in dessen Höhenlage gegenüber einem Maschinenrahmen verstellt werden. Auch denkbar wäre es bspw. bei einem mittels Parallelogramms montierten Säschar bspw. einen oder beide Anlenkpunkte der Parallellogrammlenker gegenüber einer Acker- oder Bodenfläche zu verdrehen, bspw. im Uhrzeigersinn oder im Gegenuhrzeigersinn. Auch denkbar wäre es bspw. bei einem mittels Parallelogramms montierten Säschar, bspw. einen oder beide Parallellogrammlenker in dessen Länge zu verändern. Auch denkbar wäre es bspw. bei einem mittels Parallelogramms montierten Säschar bspw. einen Abstand der beiden Parallellogrammlenker zu verändern. Auch denkbar wäre es bspw. eine Drehlage des Trägers an welchem das Parallellogrammschar angebaut ist zu verändern. Denkbar wäre es auch, die Anlenkpunkte in dessen Höhenlage gegenüber einer Acker- oder Bodenfläche zu verändern.

Wenn im vorliegenden Zusammenhang an mehreren Stellen der Begriff "zugeordnet" verwendet wurde, so meint dies jegliche mittelbare oder unmittelbare, räumliche oder räumlich getrennte Verbindungen oder Koppelungen einer Sensorvorrichtung mit einem Säschar oder einem Maschinenrahmen oder anderen Teilen der Maschine, wie sie oben genannt worden waren, zu subsumieren.

Die mittels der Sensoren erfassten Daten können von den Sensoren an eine Datenverarbeitungseinrichtung übermittelt und anschließend mittels dieser Datenverarbeitungseinrichtung weiterverarbeitet werden. Insbesondere kann mittels der Datenverarbeitungseinrichtung eine Auswertung erfolgen. Wie oben erwähnt, kann die Datenverarbeitungseinrichtung auch als Signalverarbeitungs- und/oder Steuerungseinrichtung betrachtet werden.

Erfindungsgemäß können die Ausgangssignale der Sensorvorrichtungen mittels Sensordatenfusion weiter verarbeitet werden und anhand der mittels der Sensordatenfusion generierten Istwerte, wiederum Stellsignale für den Aktuator generiert werden um somit insbesondere Sollwerte zu erhalten.

In Abhängigkeit von einer Erhöhung oder Verringerung der Saattiefe (z.B. Arbeitstiefe) und/oder des Schardrucks kann bspw. ein Druckniveau in einem Aktuator (Zylinder) erhöht oder verringert werden (Druckregelung), oder es kann ein dem Aktuator zugeführter Volumenstrom entsprechend erhöht oder verringert werden (Volumenstromregelung).

Eine Auswertung kann insbesondere derartig erfolgen, dass die Aktuatoren jeweils automatisiert mittels der Datenverarbeitungseinrichtung angesteuert werden können, wobei zweckmäßig insbesondere vorgesehen sein kann, dass die Datenverarbeitungseinrichtung mit einer Eingabeeinrichtung (z.B. Terminal, mobiles Endgerät, oder dergl.) signalverbunden und/oder signalverbindbar ist und eine Bedienperson jeweils eine gewünschte Saattiefe (z.B. Sollwert) oder einen gewünschten Schardruck (z.B. Sollwert) definieren kann. Gemäß einer Weiterbildung wäre es auch denkbar, dass eine Bedienperson die Saattiefe oder den Schardruck nur innerhalb definierter oder definierbarer Grenzen frei definieren kann, d.h. dass Sollwerte bspw. nur innerhalb definierter oder definierbarer Grenzen frei wählbar sein können. Es sei angemerkt, dass der Grenzwert auch den Wert 0 haben bzw. aufweisen kann.

Es ist möglich, dass der Aktuator als elastisches Lagerelement dient, bspw. indem mit dem Aktuator (z.B. Zylinder - bzw. zumindest mit der Kolbenboden- oder Kolbenstangenseite des Zylinders) ein Druckspeicher gekoppelt ist bzw. in Wirkverbindung steht. Neben einem Aktuator wären auch mechanische Stellelemente zur Verstellung der Lage (z.B. Drehlage und/oder Höhenlage) des Trägers gegenüber dem Maschinenrahmen denkbar, bspw. Kurbel-, Steck-, Rastsysteme und/oder dergl.

Um ein Ausweichen der Säschare beim Auftreffen auf Hindernisse zu ermöglichen, sind die Säschare vorzugsweise schwenkbar am Träger angebracht. Die schwenkbare Lagerung erfolgt insbesondere mittels elastischer Lagerelemente, bspw. mittels aus dem Stand der Technik bekannter Gummischnurlagerungen. Auch eine elastische Lagerung mittels Zug-, Druckfeder oder dergl. wäre denkbar bzw. einsetzbar. Die Lagerelemente sind insbesondere ausgebildet, eine Vorspannkraft gegenüber einer Acker- oder Bodenfläche zu erzeugen. Wobei die Vorspannkraft insbesondere durch eine Veränderung der Lage des Trägers beeinflusst werden kann. Bspw. in Abhängigkeit der Drehlage des Trägers gegenüber der Acker- oder Bodenfläche bzw. gegenüber dem Maschinenrahmen.

Es sei noch darauf hingewiesen, dass die vorliegende Erfindung neben Säscharen auch in anderen Komponenten landwirtschaftlicher Maschinen eingesetzt werden kann. Insbesondere bei derartigen Komponenten eingesetzt werden kann, welche auch mit einer möglichst exakten Arbeitstiefe (z.B. Saattiefe) entlang einer landwirtschaftlichen Fläche geführt werden müssen. Bspw. Zinken, Schneidscheiben, Scharspitzen und/oder dergl. landwirtschaftliche Werkzeuge.

Mittels der somit geschaffenen landwirtschaftlichen Maschine kann eine konstante Arbeitstiefe (z.B. Saattiefe) auch bei wechselnden Bodenbedingungen gewährleistet werden.

Es sei an dieser Stelle nochmal ausdrücklich betont, dass alle Aspekte und Ausführungsvarianten, die im Zusammenhang mit der landwirtschaftlichen Maschine erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen von der landwirtschaftlichen Maschine die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte der landwirtschaftlichen Maschine sein können.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt eine schematische Perspektivansicht einer landwirtschaftlichen Maschine, an deren hinterem Ende mehrere Arbeitswerkzeuge gelagert sind, die jeweils durch Säschare gebildet sind.
Fig. 1B zeigt eine schematische Seitenansicht einer landwirtschaftlichen Maschine, mit an einem Träger angebrachten Werkzeugeinheiten, welche entlang einer Acker- oder Bodenfläche geführt werden, wobei die Werkzeugeinheiten mit geringer Arbeitstiefe durch den Boden bewegt werden.
Fig. 1C zeigt eine schematische Seitenansicht der landwirtschaftlichen Maschine gemäß Fig. 1B, bei der die Werkzeugeinheiten mit großer Arbeitstiefe durch den Boden bewegt werden.
Fig. 2A zeigt eine Detailansicht des hinteren Abschnittes der Maschine gemäß Fig. 1B und Fig. 1C mit den durch Säschare gebildeten Werkzeugeinheiten.
Fig. 2B zeigt anhand einer weiteren Detailansicht gemäß Fig. 2B die bei der Maschine einsetzbare Sensorik und ihr Zusammenwirken für eine Regelung der Arbeitstiefe.
Fig. 3A zeigt eine schematische Seitenansicht der auf ebenem Untergrund arbeitenden landwirtschaftlichen Maschine gemäß der Fig. 1A.
Fig. 3B zeigt eine schematische Seitenansicht der auf geneigtem Untergrund arbeitenden landwirtschaftlichen Maschine gemäß der Fig. 1A.
Fig. 3C zeigt eine Detailansicht der Werkzeugeinheiten der Maschine gemäß Fig. 3A, die auf ebenem Untergrund betrieben wird.
Fig. 3D zeigt eine Detailansicht der Werkzeugeinheiten der Maschine gemäß Fig. 3B, die auf geneigtem Untergrund betrieben wird.

Die in den folgenden Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße landwirtschaftliche Arbeitsmaschine ausgestaltet sein und das erfindungsgemäße Verfahren ausgeführt werden können und stellen keine abschließende Begrenzung dar.

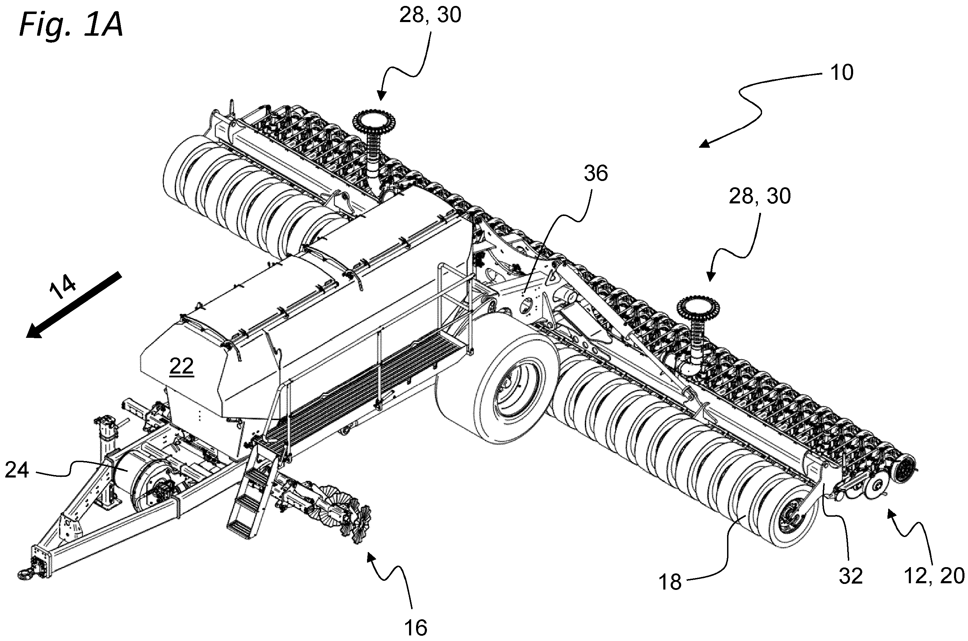

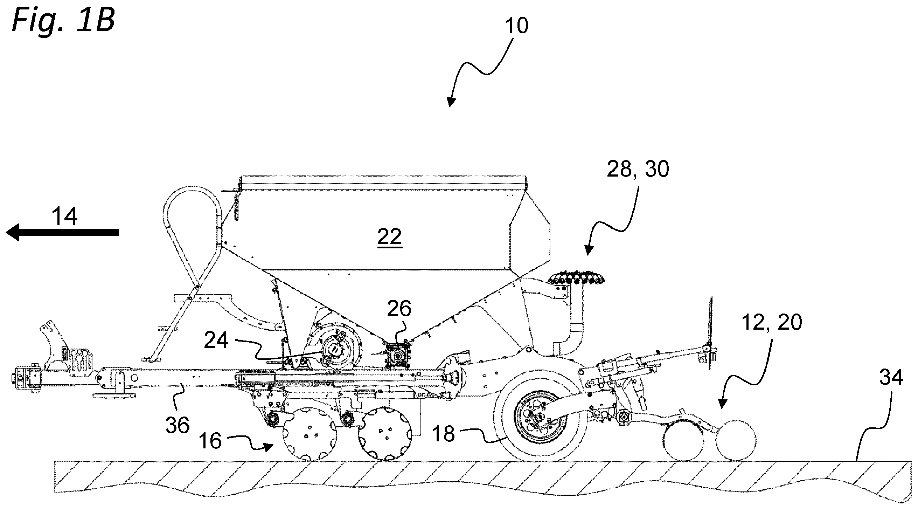

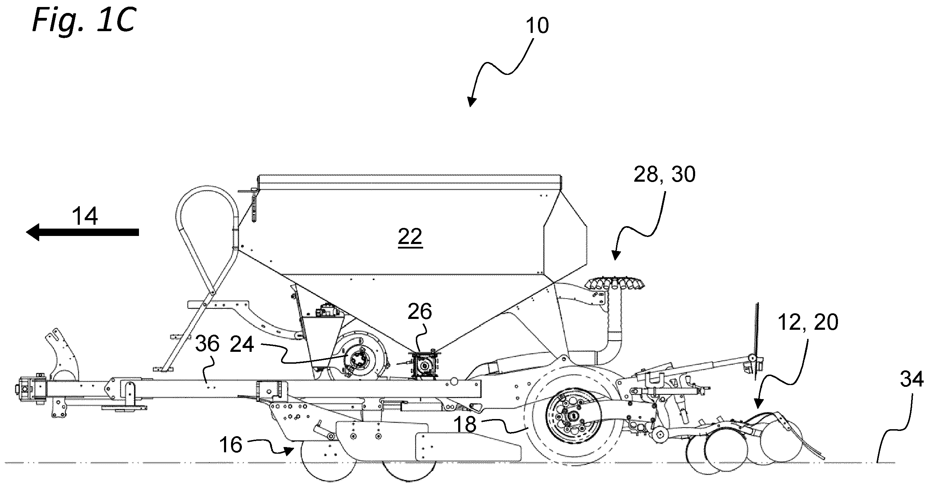

In der Praxis eingesetzte Ausführungsvarianten von erfindungsgemäßen landwirtschaftlichen Arbeitsmaschinen 10 gehen aus der perspektivischen Ansicht der Fig. 1A und aus den schematischen Seitenansichten der Figuren 1B und 1C hervor. Die landwirtschaftliche Arbeitsmaschine 10 ist als eine zur Bodenbearbeitung und zur Aussaat geeignete Maschine ausgebildet und umfasst heckseitig angeordnet eine Vielzahl von unterschiedlichen Werkzeugeinheiten 12. Die Werkzeugeinheiten werden in Bewegungsrichtung 14 der typischerweise durch eine landwirtschaftliche Zugmaschine (hier nicht gezeigt) gezogenen Maschine 10 betrachtet durch scheibenartige Bodenbearbeitungselemente 16 gebildet, welchen über die gesamte Arbeitsbreite der Arbeitsmaschine 10 eine Packerwalze 18 und wiederum anschließend an die Packerwalze 18 als Werkzeugeinheiten 12 Säschare 20 folgen.

Zum Mitführen der jeweils zu verteilenden Güter - dies kann bspw. Saatgut sein - umfasst die landwirtschaftliche Arbeitsmaschine 10 darüber hinaus einen Vorratsbehälter 22 und ein dem Vorratsbehälter 22 zugeordnetes Gebläse 24, eine am tiefsten Punkt des Vorratsbehälter 22 angeordnete Dosiervorrichtung 26 sowie ein Verteilsystem 28, hier gebildet durch zwei parallel gespeiste Verteilertürme 30, die über Schlauchleitungen (hier nicht gezeigt) mit den Säscharen 20 verbunden sind. Auf diese Weise kann mittels des Verteilsystems 28 bzw. den Verteilertürmen 30 den Werkzeugeinheiten 12 jeweils eine definierte Menge an zu verteilenden Gütern zugeführt werden.

Die schematische Seitenansicht der Fig. 1B zeigt eine Arbeitsmaschine 10, deren Werkzeugeinheiten 12 und deren scheibenartige Bodenbearbeitungselemente 16 nur schwach oder kaum in die Bodenoberfläche 34 eingreifen, während die Darstellung der Fig. 1C einen Maschinenzustand zeigt, bei dem sowohl die scheibenartigen Bodenbearbeitungselemente 16 als auch die Säschare 20 der heckseitig an der Maschine 10 angeordneten Werkzeugeinheiten 12 stärker in den Boden 34 eintauchen.

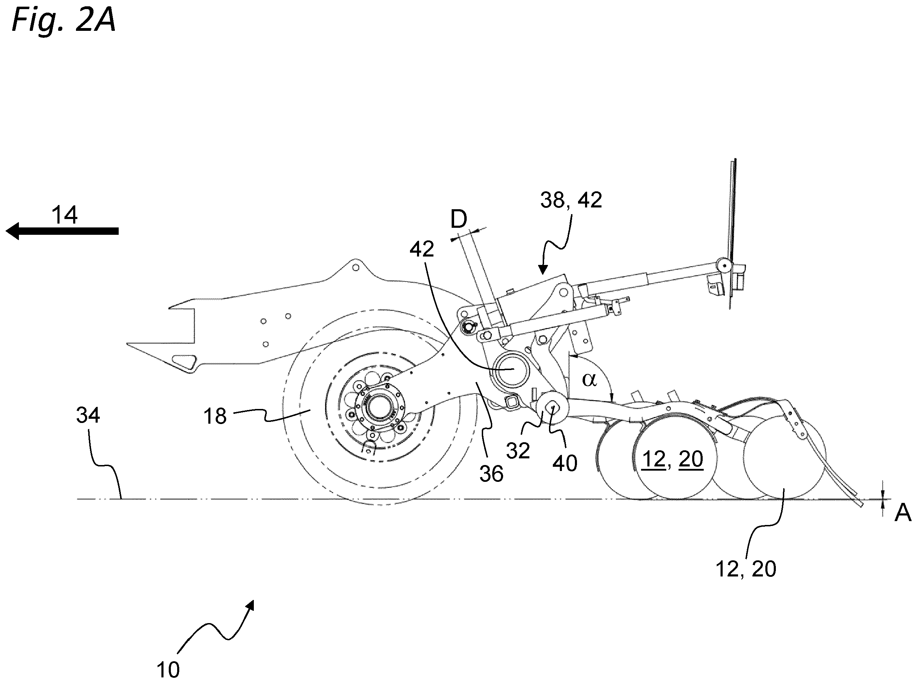

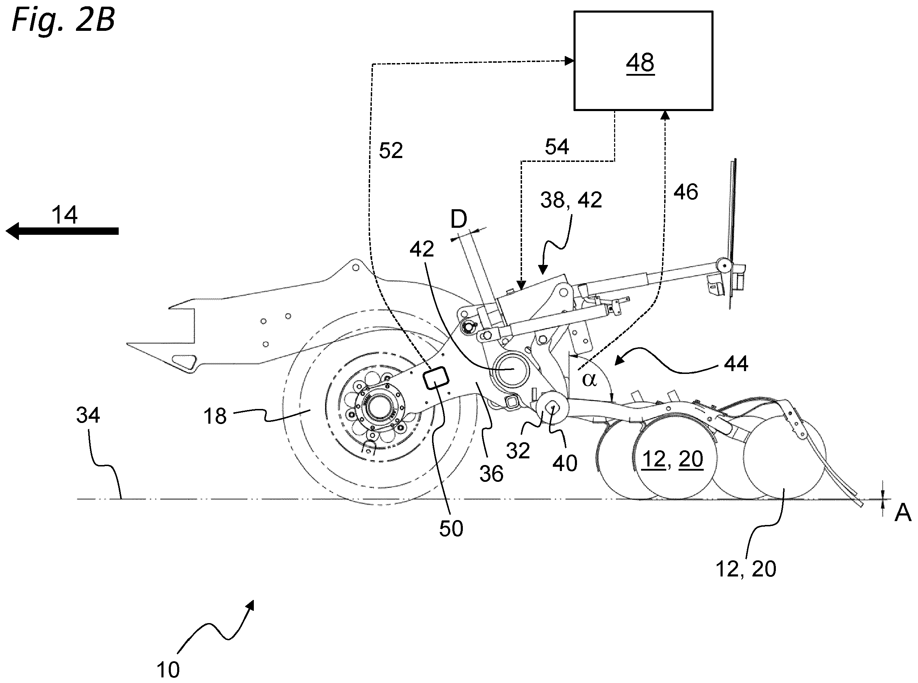

Weitere Details einer Ausführungsform der landwirtschaftlichen Arbeitsmaschine 10 und einige ihrer Komponenten gehen aus den schematischen Seitenansichten der Figuren 2A und 2B hervor, die jeweils einen hinteren Abschnitt der landwirtschaftlichen Arbeitsmaschine 10 gemäß den Figuren 1A bis 1C verdeutlichen. So lassen die Figuren 2A und 2B die an einem Träger 32 angebrachten Werkzeugeinheiten 12 erkennen, welche in Abhängigkeit von einer jeweiligen Lage des Trägers 32 mit einer definierten und/oder definierbaren Arbeitstiefe A (hier bzw. nachfolgend teilweise auch als Saattiefe bezeichnet) entlang der Bodenfläche 34 (hier bzw. nachfolgend teilweise auch als Ackerfläche 34 bezeichnet) geführt werden.

Zum Tragen und Führen der Bauteile und Komponenten der landwirtschaftlichen Arbeitsmaschine 10 umfasst die Arbeitsmaschine 10 einen Maschinenrahmen 36. Dabei ist vorgesehen, dass am Maschinenrahmen 36 mindestens ein Träger 32 mittels eines Verstellmechanismus 38 in seiner Lage gegenüber dem Maschinenrahmen 36 veränderbar gelagert ist.

Gemäß der Ausführungsformen der Figuren 1 und 2 ist der Verstellmechanismus 38 derartig ausgebildet, dass der Träger 32 mittels des Verstellmechanismus 38 über eine quer zu einer Vorwärtsrichtung oder Bewegungsrichtung 14 orientierten Achse 40 drehbar gegenüber dem Maschinenrahmen 36 gelagert ist und mittels einer Dreheinheit 42 höhenverstellbar gegenüber dem Maschinenrahmen 36 gelagert ist.

Der Träger 32 ist zweckmäßig insbesondere quer zur Vorwärtsrichtung 14 der landwirtschaftlichen Maschine 10 orientiert. Der Träger 32 ist zudem mittels der quer zur Vorwärtsrichtung 14 orientierten Achse 40 drehbar zum Maschinenrahmen 36 angeordnet. Dabei entspricht die Achse 40 einer Längsachse des Trägers 32. Zur Drehung des Trägers 32 um die Achse 40 und damit zur Höhenverstellung der Werkzeugeinheiten 12 umfasst der Verstellmechanismus 38 eine hier nicht detailliert gezeichnete motorische Stelleinrichtung 42, die insbesondere durch einen hydraulisch und/oder elektrisch und/oder pneumatisch betriebenen Aktor gebildet sein kann. Mittels der motorischen Stelleinrichtung 42 und dem dieser zugeordneten Aktor kann der Träger 32 gegenüber der Packerwalze 18 verschwenkt werden. In Abhängigkeit von einem Verfahrweg D des Aktors der Stelleinrichtung 42 kann somit die Arbeitstiefe A (z.B. Saattiefe) der Werkzeugeinheit 12 verändert werden.

Die Werkzeugeinheiten 12 können insbesondere mittels Federelementen am Träger 32 gelagert sein. Dabei können die Federelemente vorzugsweise als Elastomerlager (z.B. Gummischnurlager) ausgebildet sein, die jeweils zwischen dem Träger 32 und einem Rahmen der Werkzeugeinheiten 12 angeordnet sein können. Die hier nicht näher verdeutlichten Federelemente sind insbesondere derartig ausgebildet, dass mittels dieser die Werkzeugeinheiten 12 mit einer definierten und/oder definierbaren Vorspannkraft entlang der Bodenoberfläche 34 geführt werden können. Insbesondere sind die Federelemente derartig ausgebildet, dass die mittels dieser erzeugbare Vorspannkraft in Abhängigkeit der Lage des Trägers 32 veränderbar ist, zweckmäßig erhöht oder verringert werden kann. Dabei kann die Erhöhung und/oder Verringerung insbesondere in Abhängigkeit einer Auslenkung der Werkzeugeinheit 12 gegenüber dem Maschinenrahmen 36 erfolgen.

Um die jeweilige Auslenkung der Werkzeugeinheiten 12 zu ermitteln, ist im gezeigten Ausführungsbeispiel vorgesehen, dass zumindest einer Werkzeugeinheit 12 eine erste Erfassungseinrichtung 44 zugeordnet ist. Diese hier nur durch einen Bezugspfeil angedeutete erste Erfassungseinrichtung 44 kann bspw. zur Erfassung eines Schwenkwinkels α der Werkzeugeinheit 12 gegenüber dem Maschinenrahmen 36 ausgebildet sein.

Wie es die Fig. 2B erkennen lässt, ist die erste Erfassungseinrichtung 44 mit einer die Ausgangssignale 46 der ersten Erfassungseinrichtung 44 empfangenden und verarbeitenden Signalverarbeitungs- und Steuereinrichtung 48 verbunden, und es kann mittels eines in der Signalverarbeitungs- und Steuereinrichtung 48 hinterlegten Steuerungs- und/oder Regelungsprogramms auf Basis eines erfassten Winkels α eine Auswertung bzgl. einer Auslenkung der Werkzeugeinheit 12 erfolgen.

Die erste Erfassungseinrichtung 44 kann bspw. durch einen zwischen dem Maschinenrahmen 36 und dem Träger 32 und/oder der Werkzeugeinheit 12 angeordneten Winkelsensor gebildet sein und/oder einem derartigen entsprechen. Die von der ersten Erfassungseinrichtung an die Signalverarbeitungs- und Steuereinrichtung 48 gelieferten Ausgangssignale 46 weisen eine eindeutige Abhängigkeit vom gemessenen Schwenkwinkel α auf, der mittels des Winkelsensors zwischen dem Träger 32 und dem Maschinenrahmen 36 gemessen wird. Diese Abhängigkeit kann bspw. eine Proportionalität sein, was jedoch für eine präzise Messdatenerfassung und deren Verarbeitung keinesfalls zwingend ist.

Als erste Erfassungseinrichtung 44 kann im vorliegenden Ausführungsbeispiel etwa eine relativ einfach aufgebaute, optisch arbeitende Winkelmesseinrichtung, ein Winkelsensor mit Drehpotentiometer, ein induktiv arbeitender Winkel- oder Wegsensor, ein Winkel- oder Wegsensor mit Hall-Geber o. dgl. eingesetzt werden.

Weiterhin lässt die Fig. 2B eine dort lediglich schematisch angedeutete zweite Erfassungseinrichtung 50 erkennen, die der Erfassung eines Abstandes des Maschinenrahmens 36 vom Boden oder auch der Erfassung einer Winkellage des Maschinenrahmens 36 im Raum dienen kann. Somit kann die zweite Erfassungseinrichtung 50 bspw. durch einen Abstandssensor, einen Neigungssensor, einen Beschleunigungssensor o. dgl. gebildet sein, der seine Ausgangssignale 52 ebenfalls an die Signalverarbeitungs- und Steuereinrichtung 48 liefert.

Somit kann als zweite Erfassungseinrichtung 50 etwa ein optisch arbeitender Distanzmesser eingesetzt werden, der auf einer elektrooptischen Entfernungsmessung basiert. Wird ein solcher Distanzmesser als Sensoreinrichtung oder als zweite Erfassungseinrichtung 50 an einem höhenbeweglichen Bauteil oder eines Teils des Maschinenrahmens 36 der landwirtschaftlichen Maschine 10, dessen Abstand zum Boden sich verändert und gemessen werden soll, montiert, so lässt sich mit einer solchen elektrooptischen Entfernungsmesseinrichtung permanent oder in zyklischen Abständen eine Distanz zum Untergrund oder Ackerboden 34 erfassen.

Anstelle einer elektrooptischen Entfernungsmessung eignen sich gleichermaßen Verfahren, die mit elektromagnetischen Wellen in anderen Wellenlängenbereichen arbeiten, so etwa Ultraschall-Messverfahren oder Radar-Messverfahren.

Soll mit der zweiten Erfassungseinrichtung 50 dagegen konkret eine aktuelle Winkellage eines Referenzbauteils der landwirtschaftlichen Maschine 10 im Raum erfasst werden, so kann hierfür in vorteilhafter Weise bspw. ein elektronisch arbeitender Winkel- oder Lagesensor oder auch ein Beschleunigungssensor eingesetzt werden.

In der Signalverarbeitungs- und Steuereinrichtung 48 sind Sollwerte hinterlegt, die sich auf die Arbeitstiefe A (z.B. Saattiefe) und/oder den Auflagedruck der Werkzeugeinheiten 12 im Boden 34 beziehen, so dass durch die Signalverarbeitungs- und Steuereinrichtung 48 mittels Abgleich der von den beiden Erfassungseinrichtungen 44 und 50 gelieferten Messwerte 46 und 52 mit den Sollwerten passende Steuersignale 54 für die Ansteuerung der motorischen Stelleinrichtung 42 des Verstellmechanismus 38 generiert werden können. Die motorische Stelleinrichtung 42 kann auf diese Weise die Arbeitstiefe A (z.B. Saattiefe) und/oder den Auflagedruck der Werkzeugeinheiten 12 so einstellen, dass diese Werte Sollvorgaben entsprechen und/oder auch bei wechselnden Bodenbedingungen konstant gehalten werden können.

Ergänzend sei an dieser Stelle darauf hingewiesen, dass die anhand der Figuren 2A und 2B beispielhaft illustrierten Regelungsmechanismen zur Sätiefenregelung gleichermaßen zur Regelung der Arbeitstiefe A (z.B. Saattiefe) von weiteren Bodenbearbeitungswerkzeugen eingesetzt werden können. Dies können etwa auch die Bodenbearbeitungselemente 16 sein, die bspw. durch zwei hintereinander angeordnete Reihen von Scheibeneggen gebildet sein können (vgl. Fig. 1B und Fig. 1C). Auch bei diesen Werkzeugen 16 kann es sinnvoll sein, ihre jeweilige Arbeits- oder Eingriffstiefe zu erfassen und in gewünschter Weise zu regeln, ggf. in Kombination mit der Regelung der Arbeitstiefe A (z.B. Saattiefe) der nachgeordneten Säschare 20, wie dies oben schon beschrieben wurde.

Bei den Bodenbearbeitungswerkzeugen 16 kann es sich bspw. auch um hier nicht dargestellte Zinkenschare oder andere geeignete Eingriffswerkzeuge handeln, deren Arbeitstiefe und/oder deren Eingriffsdruck auf die beschriebene Weise erfasst und geregelt werden kann.

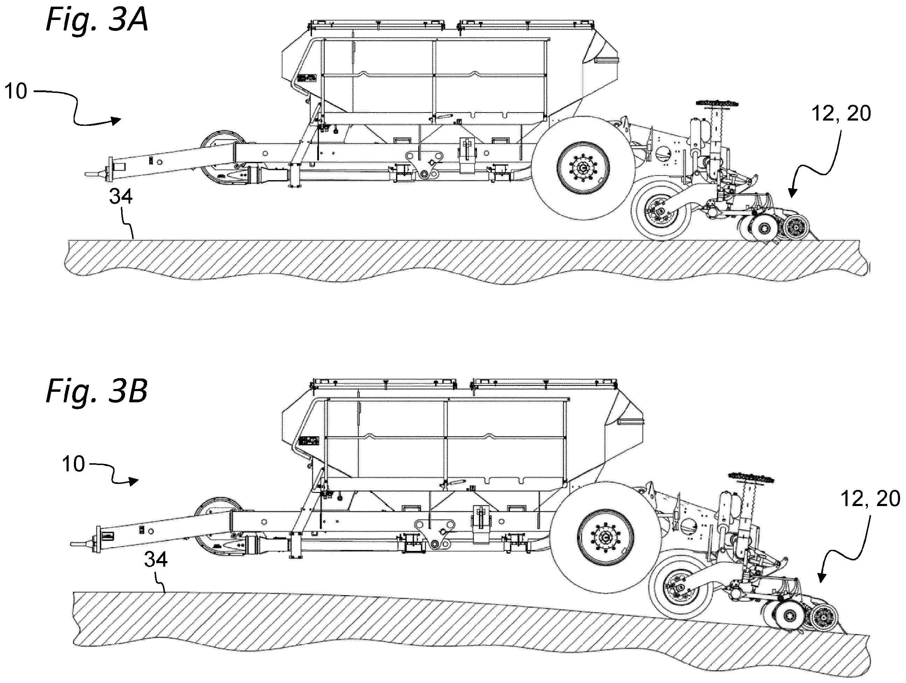

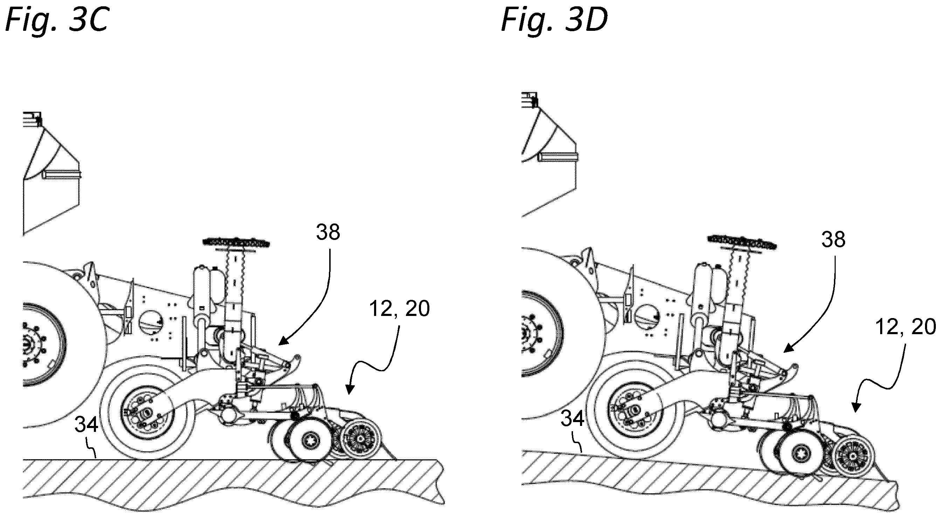

Die schematischen Seitenansichten der Figuren 3A und 3B und die Detailansichten der Figuren 3C und 3D verdeutlichen die Notwendigkeit einer solchen überlagerten Regelung der Arbeitstiefe A (z.B. Saattiefe) und/oder des Auflagedrucks. Während die landwirtschaftliche Arbeitsmaschine 10 gemäß Fig. 3A und Fig. 3C auf einer ebenen Bodenfläche 34 betrieben wird, ist die Bodenfläche 34 in der Arbeitssituation der Figuren 3B und 3D geneigt. Bei gleichen Sensorwerten der ersten Erfassungseinrichtung 44, die Winkeldaten für die Höheneinstellung des Trägers 32 gegenüber dem Maschinenrahmen 36 liefert, sorgt die geneigte Bodenfläche 34 in der Arbeitssituation der Figuren 3B und 3D für eine falsche Einstellung, wenn nicht gleichzeitig die Sensorwerte der zweiten Erfassungseinrichtung 50 mitberücksichtigt werden. Mit Hilfe der bspw. durch einen Neigungssensor gebildeten zweiten Erfassungseinrichtung 50 kann erkannt werden, dass sich die Maschine 10 nicht auf einem ebenen Boden 34 befindet, sondern bspw. an einer Hangneigung, so dass zur Aufrechterhaltung der unveränderten Arbeitstiefe A (z.B. Saattiefe) der Werkzeugeinheiten 12 im Boden 34 eine geänderte Ansteuerung des Verstellmechanismus 38 erforderlich ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können innerhalb des Schutzbereichs der Ansprüche. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Landwirtschaftliche Maschine, landwirtschaftliche Arbeitsmaschine
- 12: Werkzeugeinheit
- 14: Vorwärtsrichtung, Bewegungsrichtung
- 16: Bodenbearbeitungselement, scheibenartiges Bodenbearbeitungselement
- 18: Packerwalze
- 20: Säschar
- 22: Vorratsbehälter
- 24: Gebläse
- 26: Dosiervorrichtung
- 28: Verteilsystem
- 30: Verteilerturm
- 32: Träger
- 34: Bodenfläche, Bodenoberfläche, Ackerboden, Ackerfläche
- 36: Maschinenrahmen
- 38: Verstellmechanismus
- 40: Achse
- 42: Stelleinrichtung, motorische Stelleinrichtung
- 44: erste Erfassungseinrichtung
- 46: Ausgangssignal
- 48: Signalverarbeitungs- und Steuereinrichtung
- 50: zweite Erfassungseinrichtung
- 52: Ausgangssignal
- 54: Steuersignal

- α: Winkel Werkzeugträger gegenüber Maschinenrahmen
- D: Verfahrweg Aktor, Verfahrweg Stelleinrichtung
- A: Arbeitstiefe

## Patentansprüche

1. Landwirtschaftliche Arbeitsmaschine (10), vorzugsweise zur Bodenbearbeitung und/oder Aussaat, umfassend zumindest:
- einen Maschinenrahmen (36) mit mindestens einem daran mittels eines Verstellmechanismus (38) höhen- und/oder winkelverstellbar gelagerten Träger (32), wobei am Träger (32) wenigstens eine Werkzeugeinheit (12) angebracht ist, deren Auflagedruck auf den zu bearbeitenden Boden (34) und/oder deren Arbeitstiefe (A) in Abhängigkeit von einer mittels des Verstellmechanismus (38) einstellbaren Lage des Trägers (32) gegenüber dem Maschinenrahmen (36) veränderbar ist,
- eine erste Erfassungseinrichtung (44) zur Erfassung einer Auslenkung und/oder Winkellage und/oder Höhenveränderung des Trägers (32) und/oder der Werkzeugeinheit (12),
- eine zweite Erfassungseinrichtung (50) zur Erfassung eines aktuellen Abstandes eines Referenzbauteils der landwirtschaftlichen Maschine (10) zum Boden und/oder zur Erfassung einer aktuellen Winkellage eines Referenzbauteils der landwirtschaftlichen Maschine (10) im Raum, welche zweite Erfassungseinrichtung (50) einem Bauteil, insbesondere einem Referenzbauteil der landwirtschaftlichen Arbeitsmaschine (10) zugeordnet ist und einen aktuellen Abstand des Referenzbauteils zum Boden (34) und/oder eine aktuelle Winkellage des Referenzbauteils im Raum erfasst und daraus entsprechende Messwerte (52) generiert,
- eine mit der ersten Erfassungseinrichtung (44) sowie mit der zweiten Erfassungseinrichtung (50) wirkverbundene und Messwerte (46, 52) der Erfassungseinrichtungen (44, 50) empfangende und verarbeitende Signalverarbeitungs- und Steuereinrichtung (48),
**dadurch gekennzeichnet, dass** in der Signalverarbeitungs- und Steuereinrichtung (48) Sollwerte, insbesondere für die Arbeitstiefe (A) und/oder den Auflagedruck hinterlegt sind, und dass durch die Signalverarbeitungs- und Steuereinrichtung (48) mittels Abgleich der von den Erfassungseinrichtungen (44, 50) gelieferten Messwerte (46, 52) mit den Sollwerten Steuersignale (54) für die Ansteuerung des Verstellmechanismus (38) generierbar sind.

2. Landwirtschaftliche Arbeitsmaschine nach Anspruch 1, bei der die erste Erfassungseinrichtung (44) dem Träger (32) und/oder dem Maschinenrahmen (36) zugeordnet ist, und bei der die erste Erfassungseinrichtung (44) eine Winkellage des Trägers (32) mit der daran angeordneten Werkzeugeinheit (12) gegenüber dem Maschinenrahmen (36) erfasst und daraus entsprechende Messwerte (46) generiert.

3. Landwirtschaftliche Arbeitsmaschine nach Anspruch 1, bei der die erste Erfassungseinrichtung (44) dem Träger (32) und/oder dem Maschinenrahmen (36) zugeordnet ist, und bei der die erste Erfassungseinrichtung (44) eine Höhenveränderung des Trägers (32) mit der daran angeordneten Werkzeugeinheit (12) gegenüber dem Maschinenrahmen (36) erfasst und daraus entsprechende Messwerte (46) generiert.

4. Landwirtschaftliche Arbeitsmaschine nach einem der Ansprüche 1 bis 3, bei der die erste Erfassungseinrichtung (44) der Werkzeugeinheit (12) und/oder dem Träger (32) zugeordnet ist, und bei der die erste Erfassungseinrichtung (44) eine auf die Werkzeugeinheit (12) und/oder den Träger (32) wirkende mechanische Kraft erfasst und daraus entsprechende Messwerte (46) generiert.

5. Landwirtschaftliche Arbeitsmaschine nach einem der Ansprüche 1 bis 4, bei der die erste Erfassungseinrichtung (44) dem Verstellmechanismus (38) zugeordnet ist und einen Steuerdruck eines fluidisch wirkenden Aktors erfasst, der einen Teil des Verstellmechanismus (38) bildet.

6. Landwirtschaftliche Arbeitsmaschine nach Anspruch 1 bis 5, bei der die erste Erfassungseinrichtung (44) dem Verstellmechanismus (38) zugeordnet ist, und bei der die erste Erfassungseinrichtung (44) eine Verstellung des Trägers (32) mit der daran angeordneten Werkzeugeinheit (12) gegenüber dem Maschinenrahmen (36) erfasst und daraus entsprechende Messwerte (46) generiert.

7. Landwirtschaftliche Arbeitsmaschine nach einem der Ansprüche 1 bis 6, bei der die erste Erfassungseinrichtung (44) wenigstens einen der Werkzeugeinheit (12) und/oder dem Träger (32) zugeordneten Neigungssensors umfasst, welcher eine aktuelle Winkellage des Trägers (32) und/oder der Werkzeugeinheit (12) im Raum erfasst und daraus entsprechende Messwerte (46) generiert.

8. Landwirtschaftliche Arbeitsmaschine nach einem der Ansprüche 1 bis 7, bei der die erste Erfassungseinrichtung (44) wenigstens einen der Werkzeugeinheit (12) und/oder dem Träger (32) zugeordneten Beschleunigungssensor umfasst, welcher eine aktuelle Winkellage des Trägers (32) und/oder der Werkzeugeinheit (12) im Raum erfasst und daraus entsprechende Messwerte (46) generiert.

9. Landwirtschaftliche Arbeitsmaschine nach einem der Ansprüche 4 bis 8, bei der aus den gemessenen Kraft- und/oder Druckwerten oder aus den gemessenen Neigungs- und/oder Beschleunigungswerten eine Auslenkung und/oder Winkellage und/oder Höhenveränderung des Trägers (32) und/oder der Werkzeugeinheit (12) gegenüber dem Maschinenrahmen (36) errechenbar sind.

10. Landwirtschaftliche Arbeitsmaschine nach einem der Ansprüche 1 bis 9, bei der die zweite Erfassungseinrichtung (50) durch wenigstens einen dem Maschinenrahmen (36) zugeordneten Neigungssensor gebildet ist, der eine aktuelle Winkellage des Maschinenrahmens (36) und/oder des Referenzbauteils der Arbeitsmaschine (10) im Raum erfasst, woraus die Signalverarbeitungs- und Steuereinrichtung (48) durch Abgleich der Messwerte (46) der ersten Erfassungseinrichtung (44) eine aktuelle Arbeitstiefe (A) und/oder einen aktuellen Auflagedruck errechnen kann.

11. Landwirtschaftliche Arbeitsmaschine nach einem der Ansprüche 1 bis 9, bei der die zweite Erfassungseinrichtung (50) durch wenigstens einen dem Maschinenrahmen (36) zugeordneten Beschleunigungssensor gebildet ist, der eine aktuelle Winkellage des Maschinenrahmens (36) und/oder des Referenzbauteils der Arbeitsmaschine (10) im Raum erfasst, woraus die Signalverarbeitungs- und Steuereinrichtung (48) durch Abgleich der Messwerte (46) der ersten Erfassungseinrichtung (44) eine aktuelle Arbeitstiefe (A) und/oder einen aktuellen Auflagedruck errechnen kann.

12. Landwirtschaftliche Arbeitsmaschine nach einem der Ansprüche 1 bis 11, bei welcher der Verstellmechanismus (38) zur Lageänderung des Trägers (32) eine motorische Stelleinrichtung (42) aufweist, die durch Vorgaben der Signalverarbeitungs- und Steuereinrichtung (48) ansteuerbar ist.

13. Landwirtschaftliche Arbeitsmaschine nach einem der Ansprüche 1 bis 12, bei welcher der Träger (32) mittels des Verstellmechanismus (38) mittels einer quer zu einer Vorwärtsrichtung (14) der Arbeitsmaschine (10) orientierten Achse (40) drehbar gegenüber dem Maschinenrahmen (36) gelagert ist und/oder höhenverstellbar gegenüber dem Maschinenrahmen (36) gelagert ist.

14. Landwirtschaftliche Arbeitsmaschine nach einem der Ansprüche 1 bis 13, bei welcher die Werkzeugeinheit (12) schwenkbar am Träger (32) angebracht ist, wobei die schwenkbare Lagerung der Werkzeugeinheit (12) zumindest ein Federelement umfasst, und wobei die Werkzeugeinheit (12) mittels des zumindest einen Federelements mit definierter Vorspannkraft gegen eine Bodenfläche (34) pressbar ist.

15. Verfahren zum Steuern und/oder Regeln eines Auflagedrucks und/oder einer Arbeitstiefe (A) einer Werkzeugeinheit (12) einer landwirtschaftlichen Maschine (10), vorzugsweise einer landwirtschaftlichen Maschine (10) zur Bodenbearbeitung und/oder Aussaat,
- welche landwirtschaftliche Maschine (10) einen Maschinenrahmen (36) mit mindestens einem daran mittels eines Verstellmechanismus (38) höhen- und/oder winkelverstellbar gelagerten Träger (32) umfasst,
- wobei am Träger (32) wenigstens eine Werkzeugeinheit (12) angebracht ist, deren Auflagedruck auf den zu bearbeitenden Boden (34) und/oder deren Arbeitstiefe (A) in Abhängigkeit von einer mittels des Verstellmechanismus (38) einstellbaren Lage des Trägers (12) gegenüber dem Maschinenrahmen (36) veränderbar ist,
- wobei mittels einer ersten Erfassungseinrichtung (44) eine Auslenkung und/oder Winkellage und/oder Höhenveränderung des Trägers (32) und/oder der Werkzeugeinheit (12) erfasst wird,
- wobei mittels einer zweiten Erfassungseinrichtung (50) ein aktueller Abstand eines Referenzbauteils der landwirtschaftlichen Arbeitsmaschine (10) zum Boden (34) und/oder eine aktuelle Winkellage eines Referenzbauteils der landwirtschaftlichen Arbeitsmaschine (10) im Raum erfasst wird, welche zweite Erfassungseinrichtung (50) einem Bauteil, insbesondere einem Referenzbauteil der landwirtschaftlichen Arbeitsmaschine (10) zugeordnet ist und einen aktuellen Abstand des Referenzbauteils zum Boden (34) und/oder eine aktuelle Winkellage des Referenzbauteils im Raum erfasst und daraus entsprechende Messwerte (52) generiert,
und wobei die von der ersten Erfassungseinrichtung (44) sowie von der zweiten Erfassungseinrichtung (50) jeweils gelieferten Messwerte (46, 52) an eine Signalverarbeitungs- und Steuereinrichtung (48) übermittelt werden, welche die Messwerte (46, 52) verarbeitet und nach Abgleich mit Sollwerten, insbesondere für die Arbeitstiefe (A) und/oder den Auflagedruck Steuersignale (54) für den Verstellmechanismus (38) generiert.

16. Verfahren nach Anspruch 15, bei dem mittels der ersten Erfassungseinrichtung (44) eine Winkellage des Trägers (32) mit der daran angeordneten Werkzeugeinheit (12) gegenüber dem Maschinenrahmen (36) erfasst wird.

17. Verfahren nach Anspruch 15, bei dem mittels der ersten Erfassungseinrichtung (44) eine Höhenveränderung des Trägers (32) mit der daran angeordneten Werkzeugeinheit (12) gegenüber dem Maschinenrahmen (36) erfasst wird.

## Claims

1. An agricultural working machine (10), preferably for soil cultivation and/or for sowing, the agricultural working machine (10) comprising at least:
- a machine frame (36) with at least one carrier (32) mounted thereon so as to be height-adjustable and/or angle-adjustable by means of an adjustment mechanism (38), wherein at least one tool unit (12) is mounted to the carrier (32), of which tool unit (12) the contact pressure on the ground (34) to be worked and/or the working depth (A) is changeable depending on a position of the carrier (32) relative to the machine frame (36), which position is adjustable by means of the adjustment mechanism (38),
- a first detection device (44) for the detection of a deflection and/or an angular position and/or a change in height of the carrier (32) and/or of the tool unit (12),
- a second detection device (50) for the detection of a current distance of a reference component of the agricultural machine (10) from the ground and/or for the detection of a current angular position of a reference component of the agricultural machine (10) in space, which second detection device (50) is assigned to a component, in particular to a reference component of the agricultural working machine (10), and detects a current distance of the reference component from the ground (34) and/or a current angular position of the reference component in space and generates corresponding measured values (52) therefrom,
- a signal processing and control device (48) that is operatively connected to the first detection device (44) and to the second detection device (50) and that receives and processes measured values (46, 52) from the detection devices (44, 50),
**characterised in that** target values, in particular for the working depth (A) and/or for the contact pressure, are stored in the signal processing and control device (48), and **in that** control signals (54) for the control of the adjustment mechanism (38) are generatable by the signal processing and control device (48) by means of comparison of the target values with the measured values (46, 52) supplied by the detection devices (44, 50).

2. The agricultural working machine according to claim 1, in which the first detection device (44) is assigned to the carrier (32) and/or to the machine frame (36), and in which the first detection device (44) detects an angular position, relative to the machine frame (36), of the carrier (32) with the tool unit (12) arranged thereon and generates corresponding measured values (46) therefrom.

3. The agricultural working machine according to claim 1, in which the first detection device (44) is assigned to the carrier (32) and/or to the machine frame (36), and in which the first detection device (44) detects a change in height, relative to the machine frame (36), of the carrier (32) with the tool unit (12) arranged thereon and generates corresponding measured values (46) therefrom.

4. The agricultural working machine according to one of the claims 1 to 3, in which the first detection device (44) is assigned to the tool unit (12) and/or to the carrier (32), and in which the first detection device (44) detects a mechanical force acting on the tool unit (12) and/or on the carrier (32) and generates corresponding measured values (46) therefrom.

5. The agricultural working machine according to one of the claims 1 to 4, in which the first detection device (44) is assigned to the adjustment mechanism (38) and detects a control pressure of a fluidically acting actuator forming a part of the adjustment mechanism (38).

6. The agricultural working machine according to claims 1 to 5, in which the first detection device (44) is assigned to the adjustment mechanism (38), and in which the first detection device (44) detects a shift, relative to the machine frame (36), of the carrier (32) with the tool unit (12) arranged thereon and generates corresponding measured values (46) therefrom.

7. The agricultural working machine according to one of the claims 1 to 6, in which the first detection device (44) comprises at least one inclination sensor assigned to the tool unit (12) and/or to the carrier (32), which inclination sensor detects a current angular position of the carrier (32) and/or of the tool unit (12) in space and generates corresponding measured values (46) therefrom.

8. The agricultural working machine according to one of the claims 1 to 7, in which the first detection device (44) comprises at least one acceleration sensor assigned to the tool unit (12) and/or to the carrier (32), which acceleration sensor detects a current angular position of the carrier (32) and/or of the tool unit (12) in space and generates corresponding measured values (46) therefrom.

9. The agricultural working machine according to one of the claims 4 to 8, in which a deflection and/or an angular position and/or a change in height, relative to the machine frame (36), of the carrier (32) and/or of the tool unit (12) is calculable from the measured force values and/or pressure values or from the measured inclination values and/or acceleration values.

10. The agricultural working machine according to one of the claims 1 to 9, in which the second detection device (50) is formed by at least one inclination sensor assigned to the machine frame (36), which inclination sensor detects a current angular position of the machine frame (36) and/or of the reference component of the working machine (10) in space, wherefrom the signal processing and control device (48) can calculate a current working depth (A) and/or a current contact pressure by comparison of the measured values (46) from the first detection device (44).

11. The agricultural working machine according to one of the claims 1 to 9, in which the second detection device (50) is formed by at least one acceleration sensor assigned to the machine frame (36), which acceleration sensor detects a current angular position of the machine frame (36) and/or of the reference component of the working machine (10) in space, wherefrom the signal processing and control device (48) can calculate a current working depth (A) and/or a current contact pressure by comparison of the measured values (46) from the first detection device (44).

12. The agricultural working machine according to one of the claims 1 to 11, in which the adjustment mechanism (38) has a motorised adjustment device (42) for position change of the carrier (32), which motorised adjustment device (42) is controllable by specifications from the signal processing and control device (48).

13. The agricultural working machine according to one of the claims 1 to 12, in which the carrier (32) is mounted so as to be rotatable relative to the machine frame (36) by the adjustment mechanism (38) by means of an axis (40) oriented transversely to a forward direction (14) of the working machine (10) and/or the carrier (32) is mounted so as to be height-adjustable relative to the machine frame (36).

14. The agricultural working machine according to one of the claims 1 to 13, in which the tool unit (12) is mounted so as to be swivelable on the carrier (32), wherein the swivelable mounting of the tool unit (12) comprises at least one spring element, and wherein the tool unit (12) is pressable against a ground surface (34) with a defined preload force by means of the at least one spring element.

15. A method for the control and/or regulation of a contact pressure and/or of a working depth (A) of a tool unit (12) of an agricultural machine (10), preferably of an agricultural machine (10) for soil cultivation and/or for sowing,
- which agricultural machine (10) comprises a machine frame (36) with at least one carrier (32) mounted thereto so as to be height-adjustable and/or angle-adjustable by means of an adjustment mechanism (38),
- wherein at least one tool unit (12) is mounted to the carrier (32), of which tool unit (12) the contact pressure on the ground (34) to be worked and/or the working depth (A) is changeable depending on a position of the carrier (32) relative to the machine frame (36), which position is adjustable by means of the adjustment mechanism (38),
- wherein a deflection and/or an angular position and/or a change in height of the carrier (32) and/or of the tool unit (12) are detected by means of a first detection device (44),
- wherein a current distance of a reference component of the agricultural working machine (10) from the ground (34) and/or a current angular position of a reference component of the agricultural working machine (10) in space is detected by means of a second detection device (50), which second detection device (50) is assigned to a component, in particular to a reference component of the agricultural working machine (10), and detects a current distance of the reference component from the ground (34) and/or a current angular position of the reference component in space and generates corresponding measured values (52) therefrom,
and wherein the measured values (46, 52) supplied in each case by the first detection device (44) and by the second detection device (50) are transmitted to a signal processing and control device (48), which processes the measured values (46, 52) and, after comparison with target values, generates control signals (54) for the adjustment mechanism (38), in particular for the working depth (A) and/or for the contact pressure.

16. The method according to claim 15, in which an angular position, relative to the machine frame (36), of the carrier (32) with the tool unit (12) arranged thereon is detected by means of the first detection device (44).

17. The method according to claim 15, in which a change in height, relative to the machine frame (36), of the carrier (32) with the tool unit (12) arranged thereon is detected by means of the first detection device (44).

## Revendications

1. Machine agricole de travail (10), de préférence destinée au travail du sol et/ou au semis, comprenant au moins:
- un bâti de machine (36) comprenant au moins un support (32) qui est monté sur celui-ci de manière à pouvoir être réglé en hauteur et/ou en angle au moyen d'un mécanisme de réglage (38), dans lequel au moins une unité d'outil (12) est fixée au support (32), dont la pression d'application sur le sol à travailler (34) et/ou dont la profondeur de travail (A) peut être modifiée en fonction d'une position du support (32) par rapport au bâti de machine (36), laquelle est réglable au moyen dudit mécanisme de réglage (38),
- un premier dispositif de détection (44) destiné à détecter une déviation et/ou une position angulaire et/ou un changement en hauteur du support (32) et/ou de l'unité d'outil (12),
- un deuxième dispositif de détection (50) destiné à détecter une distance actuelle d'un composant de référence de la machine agricole (10) par rapport au sol et/ou à détecter une position angulaire actuelle d'un composant de référence de la machine agricole (10) dans l'espace, lequel deuxième dispositif de détection (50) est associé à un composant, en particulier à un composant de référence de la machine agricole de travail (10), et détecte une distance actuelle du composant de référence par rapport au sol (34) et/ou une position angulaire actuelle du composant de référence dans l'espace et en génère des valeurs mesurées correspondantes (52),
- un dispositif de traitement de signaux et de commande (48) qui est en liaison active avec le premier dispositif de détection (44) ainsi qu'avec le deuxième dispositif de détection (50) et qui reçoit et traite des valeurs mesurées (46, 52) des dispositifs de détection (44, 50),
**caractérisée par le fait que** des valeurs de consigne, en particulier pour la profondeur de travail (A) et/ou la pression d'application, sont enregistrées dans le dispositif de traitement de signaux et de commande (48), et que des signaux de commande (54) destinés à commander le mécanisme de réglage (38) peuvent être générés par le dispositif de traitement de signaux et de commande (48) en comparant les valeurs mesurées (46, 52) fournies par les dispositifs de détection (44, 50) avec les valeurs de consigne.

2. Machine agricole de travail selon la revendication 1, dans laquelle le premier dispositif de détection (44) est associé au support (32) et/ou au bâti de machine (36), et dans laquelle le premier dispositif de détection (44) détecte une position angulaire du support (32) comprenant l'unité d'outil (12) disposée sur celui-ci, par rapport au bâti de machine (36), et génère des valeurs mesurées (46) correspondantes à partir de celle-ci.

3. Machine agricole de travail selon la revendication 1, dans laquelle le premier dispositif de détection (44) est associé au support (32) et/ou au bâti de machine (36), et dans laquelle le premier dispositif de détection (44) détecte un changement en hauteur du support (32) comprenant l'unité d'outil (12) disposée sur celui-ci, par rapport au bâti de machine (36), et génère des valeurs mesurées (46) correspondantes à partir de celui-ci.

4. Machine agricole de travail selon l'une quelconque des revendications 1 à 3, dans laquelle le premier dispositif de détection (44) est associé à l'unité d'outil (12) et/ou au support (32), et dans laquelle le premier dispositif de détection (44) détecte une force mécanique agissant sur l'unité d'outil (12) et/ou le support (32) et génère des valeurs mesurées (46) correspondantes à partir de celle-ci.

5. Machine agricole de travail selon l'une quelconque des revendications 1 à 4, dans laquelle le premier dispositif de détection (44) est associé au mécanisme de réglage (38) et détecte une pression de commande d'un actionneur à action fluidique qui forme une partie du mécanisme de réglage (38).

6. Machine agricole de travail selon la revendication 1 à 5, dans laquelle le premier dispositif de détection (44) est associé au mécanisme de réglage (38), et dans laquelle le premier dispositif de détection (44) détecte un réglage du support (32) comprenant l'unité d'outil (12) disposée sur celui-ci, par rapport au bâti de machine (36), et génère des valeurs mesurées (46) correspondantes à partir de celui-ci.

7. Machine agricole de travail selon l'une quelconque des revendications 1 à 6, dans laquelle le premier dispositif de détection (44) comprend au moins un capteur d'inclinaison qui est associé à l'unité d'outil (12) et/ou au support (32) et qui détecte une position angulaire actuelle du support (32) et/ou de l'unité d'outil (12) dans l'espace et génère des valeurs mesurées (46) correspondantes à partir de celle-ci.

8. Machine agricole de travail selon l'une quelconque des revendications 1 à 7, dans laquelle le premier dispositif de détection (44) comprend au moins un capteur d'accélération qui est associé à l'unité d'outil (12) et/ou au support (32) et qui détecte une position angulaire actuelle du support (32) et/ou de l'unité d'outil (12) dans l'espace et génère des valeurs mesurées (46) correspondantes à partir de celle-ci.

9. Machine agricole de travail selon l'une quelconque des revendications 4 à 8, dans laquelle une déviation et/ou une position angulaire et/ou un changement en hauteur du support (32) et/ou de l'unité d'outil (12) par rapport au bâti de machine (36) peut être calculé(e) à partir des valeurs de force et/ou de pression mesurées ou à partir des valeurs d'inclinaison et/ou d'accélération mesurées.

10. Machine agricole de travail selon l'une quelconque des revendications 1 à 9, dans laquelle le deuxième dispositif de détection (50) est formé par au moins un capteur d'inclinaison qui est associé au bâti de machine (36) et qui détecte une position angulaire actuelle dans l'espace du bâti de machine (36) et/ou du composant de référence de la machine de travail (10), le dispositif de traitement de signaux et de commande (48) peut calculer à partir de celle-ci une profondeur de travail actuelle (A) et/ou une pression d'application actuelle en comparant les valeurs mesurées (46) du premier dispositif de détection (44).

11. Machine agricole de travail selon l'une quelconque des revendications 1 à 9, dans laquelle le deuxième dispositif de détection (50) est formé par au moins un capteur d'accélération qui est associé au bâti de machine (36) et qui détecte une position angulaire actuelle dans l'espace du bâti de machine (36) et/ou du composant de référence de la machine de travail (10), le dispositif de traitement de signaux et de commande (48) peut calculer à partir de celle-ci une profondeur de travail actuelle (A) et/ou une pression d'application actuelle en comparant les valeurs mesurées (46) du premier dispositif de détection (44).

12. Machine agricole de travail selon l'une quelconque des revendications 1 à 11, dans laquelle, pour modifier la position du support (32), le mécanisme de réglage (38) comprend un dispositif de réglage par moteur (42) qui peut être commandé par des instructions du dispositif de traitement de signaux et de commande (48).

13. Machine agricole de travail selon l'une quelconque des revendications 1 à 12, dans laquelle, grâce au mécanisme de réglage (38), le support (32) est logé de manière rotative par rapport au bâti de machine (36) au moyen d'un axe (40) orienté transversalement à une direction avant (14) de la machine de travail (10), et/ou est logé de manière réglable en hauteur par rapport au bâti de machine (36).

14. Machine agricole de travail selon l'une quelconque des revendications 1 à 13, dans laquelle l'unité d'outil (12) est montée de manière pivotante sur le support (32), dans laquelle le montage pivotant de l'unité d'outil (12) comprend au moins un élément ressort, et dans laquelle l'unité d'outil (12) peut être pressée avec une force de précontrainte définie, au moyen dudit au moins un élément ressort, contre une surface de sol (34).

15. Procédé destiné à commander et/ou à régler une pression d'application et/ou une profondeur de travail (A) d'une unité d'outil (12) d'une machine agricole (10), de préférence d'une machine agricole (10) destinée au travail du sol et/ou au semis,
- laquelle machine agricole (10) comprend un bâti de machine (36) ayant au moins un support (32) qui y est monté de manière à pouvoir être réglé en hauteur et/ou en angle au moyen d'un mécanisme de réglage (38),
- dans lequel au moins une unité d'outil (12) est montée sur le support (32), dont la pression d'application sur le sol à travailler (34) et/ou dont la profondeur de travail (A) peut être modifiée en fonction d'une position du support (12) par rapport au bâti de machine (36), laquelle peut être réglée au moyen du mécanisme de réglage (38),
- dans lequel un premier dispositif de détection (44) permet de détecter une déviation et/ou une position angulaire et/ou un changement en hauteur du support (32) et/ou de l'unité d'outil (12),
- dans lequel un deuxième dispositif de détection (50) permet de détecter une distance actuelle d'un composant de référence de la machine agricole de travail (10) par rapport au sol (34) et/ou de détecter une position angulaire actuelle d'un composant de référence de la machine agricole de travail (10) dans l'espace, lequel deuxième dispositif de détection (50) est associé à un composant, en particulier à un composant de référence de la machine agricole de travail (10), et détecte une distance actuelle du composant de référence par rapport au sol (34) et/ou une position angulaire actuelle du composant de référence dans l'espace et en génère des valeurs mesurées correspondantes (52),
et dans lequel les valeurs mesurées (46, 52) fournies respectivement par le premier dispositif de détection (44) ainsi que par le deuxième dispositif de détection (50) sont transmises à un dispositif de traitement de signaux et de commande (48) qui traite les valeurs mesurées (46, 52) et génère des signaux de commande (54) pour le mécanisme de réglage (38) après une comparaison avec des valeurs de consigne, en particulier pour la profondeur de travail (A) et/ou la pression d'application.

16. Procédé selon la revendication 15, dans lequel une position angulaire du support (32) comprenant l'unité d'outil (12) disposée sur celui-ci, par rapport au bâti de machine (36) est détectée au moyen du premier dispositif de détection (44).

17. Procédé selon la revendication 15, dans lequel un changement en hauteur du support (32) comprenant l'unité d'outil (12) disposée sur celui-ci, par rapport au bâti de machine (36) est détecté au moyen du premier dispositif de détection (44).
